# EUROPEAN PATENT APPLICATION

(11) **EP 4 403 344 A1**
(43) Date of publication of application: **24.07.2024**
(21) Application number: 23205047.6
(22) Date of filing: 20.10.2023
(51) Int. Cl.: B29D 35/10, A43D 3/02, B29D 35/00, B29D 35/12

(54) **AUTOMATIC SHOE-MAKING DEVICE**

(30) Priority: 19.01.2023 TW 112102612; 25.08.2023 TW 112132065
(71) Applicant: Prime Luck International Limited, Apia (WS)
(72) Inventor: YAO, Chih-Liang, 106 Taipei (TW); CHEN, Pei-Ru, 106 Taipei (TW); HSIAO, Chin-Hsun, 106 Taipei (TW); JHANG, Ying-Di, 106 Taipei (TW)
(74) Representative: MERH-IP Matias Erny Reichl Hoffmann Patentanwälte PartG mbB

(57) **Abstract**

An automatic shoe-making device (1') includes a bottom mold unit (10) having a shoe last (14), two side mold units (20) driven to combine with or separate from each other, a pressing mold unit (30) driven to be movable relative to the bottom mold unit (10), a feeding unit (60'), and a control unit (40), which is configured to: control the two side mold units (20) and the pressing mold unit (30) to move toward the bottom mold unit (10) to surround the shoe last (14) to form a mold cavity (100), control the feeding unit (60') to feed a sole material (300) into the mold cavity (100) in supercritical state, control the pressing mold unit (30) to hot-press the sole material (300) to form a shoe product (200) or a shoe component (220, 230), and control the pressing mold unit (30) and the two side mold units (20) to move away from the bottom mold unit (10) to allow the shoe product (200) or the shoe component (220, 230) to be removed from the shoe last (14).

## Description

### BACKGROUND OF THE INVENTION

### 1. Field of the Invention

The invention generally relates to an automatic shoe-making device. Particularly, the invention relates to an automatic shoe-making device for reducing the working hour and promoting the production throughput.

### 2. Description of the Prior Art

Shoes are indispensable products in daily life, and shoes usually include an upper and a sole. In general, the upper can be made of leather, plastics, textile, etc., and the knitted uppers have become one of the focusing developments in the footwear industry because of their better permeability and wearing comfort. The sole typically includes a midsole and/or an outsole and can be made of foamed materials or rubber materials, and the soles made of foamed material have gradually become the mainstream.

In the conventional shoe-making process, the upper and the sole are usually manufactured separately and then combined together by coating adhesives, so the process is complicated and inefficient.

### SUMMARY OF THE INVENTION

It is an object of the invention to provide an automatic shoe-making device, which utilizes a control unit to control the operation of each unit to reduce the man power and the production cost, so as to effectively reduce the working hour for assembling/disassembling the molds and substantially promote the production throughput.

It is another object of the invention to provide an automatic shoe-making device, which can be applied to the manufacture of various kinds of shoe products or shoe components, such as an integral shoe product having a midsole (and an outsole or a patch) and an upper, or a sole including an outsole or a midsole (and an outsole and/or a patch) that is made of foamed material.

In an embodiment, the invention provides an automatic shoe-making device including a bottom mold unit including a shoe last configured to selectively receive an upper, two side mold units disposed at two sides of the bottom mold unit and driven to combine with or separate from each other along a first direction, a pressing mold unit driven to be movable relative to the bottom mold unit along a second direction perpendicular to the first direction, a feeding unit configured to feed a sole material in a supercritical fluid state and a control unit configured to: control the two side mold units to move toward the bottom mold unit to form a combined configuration, so the two side mold units surround the shoe last to together form a mold cavity, control the pressing mold unit to move toward the bottom mold unit to close the mold cavity, control the feeding unit to feed the sole material into the mold cavity in the supercritical fluid state, control the pressing mold unit to hot-press the sole material disposed in the mold cavity to form a shoe product or a shoe component, and control the pressing mold unit and the two side mold units to move away from the bottom mold unit to allow the shoe product or the shoe component to be removed from the shoe last.

In an embodiment, the bottom mold unit is movable along a third direction to get close to or away from an operation zone. The pressing mold unit and the two side mold units are driven to move relative to the bottom mold unit located in the operation zone. The third direction is perpendicular to the first direction and the second direction.

In an embodiment, the control unit is configured to control at least one driving unit, so the at least one driving unit drives the two side mold units, the pressing mold unit, and the bottom mold unit to move, respectively.

In an embodiment, each of the two side mold units includes a side mold base and a side mold detachably combined with the side mold base. The pressing mold unit includes a pressing mold base and a pressing mold detachably combined with the pressing mold base. The bottom mold unit includes a bottom mold base, and the shoe last is detachably combined with the bottom mold base.

In an embodiment, at least one of the side mold base, the pressing mold base, and the bottom mold base includes a thermal device and a thermal sensor. The thermal device modulates a temperature of the at least one of the side mold base, the pressing mold base, and the bottom mold base to a hot-press temperature or a mold-release temperature based on a temperature sensed by the thermal sensor.

In an embodiment, the side mold has a receiving portion for accommodating a patch.

In an embodiment, the feeding unit includes a sole material supplier and a feeder. The sole material supplier is configured to supply the sole material to the feeder. The feeder is movable relative to the mold cavity to feed the sole material into the mold cavity through the feeder.

In an embodiment, the sole material supplier includes a sole material container configured to contain the sole material and a dispenser configured to dispense the sole material to the feeder in a predetermined amount.

In an embodiment, the automatic shoe-making device further includes a sole supply base configured to accommodate an outsole. The sole supply base is movable to be located below the pressing mold unit, so as to allow the pressing mold unit to pick up the outsole from the sole supply base.

In an embodiment, the automatic shoe-making device further includes a robot arm movable between a loading position and a pick-up ready position. The robot arm is configured to transfer the sole supply base with the outsole accommodated thereon from the loading position to the pick-up ready position, so the pressing mold unit is allowed to pick up the outsole.

In an embodiment, the automatic shoe-making device further includes a conveying unit configured to convey the bottom mold unit close to or away from the operation zone.

In an embodiment, the automatic shoe-making device includes a plurality of the bottom mold units. The conveying unit sequentially conveys the plurality of bottom mold units to the operation zone for forming the shoe product or the shoe component.

In an embodiment, the side mold and the side mold base, the pressing mold and the pressing mold base, or the bottom mold base and the shoe last are detachably combined with each other in a pneumatic joint manner.

In an embodiment, the shoe component includes an outsole, a midsole, a sole including a midsole and an outsole, a midsole with a patch, or a sole including a midsole with a patch and an outsole. The shoe product includes an integral shoe product including a midsole and the upper, an integral shoe product including a midsole, an outsole and the upper, an integral shoe product including a midsole with a patch and the upper, or an integral shoe product including a midsole with a patch, an outsole and the upper.

In an embodiment, the feeding unit includes a sole material supplier and a feeder. The sole material supplier is configured to supply the sole material to the feeder, and the feeder feeds the sole material into the mold cavity in a supercritical fluid state.

In an embodiment, the feeder includes a mixing unit and an extrusion unit. The mixing unit is configured to mix the sole material with gas to form a mixture in the supercritical fluid state, and the extrusion unit is configured to extrude the mixture into the mold cavity.

In an embodiment, the pressing mold unit has a feeding channel. The mixing unit moves toward the mold cavity to couple with the feeding channel after the pressing mold unit moves to close the mold cavity, so as to allow the extrusion unit to extrude the mixture into the mold cavity through the feeding channel.

In an embodiment, the pressing mold unit includes a pressing mold base, a first pressing mold, and a second pressing mold detachably engaged with the first pressing mold. The first pressing mold is connected between the pressing mold base and the second pressing mold. The first pressing mold has a first channel portion, and the second pressing mold has a second channel portion. When the first pressing mold is engaged with the second pressing mold, the first channel portion communicates with the second channel portion to form the feeding channel.

In an embodiment, each of the two side mold units has a feeding groove. When the two side mold units form the combined configuration, the feeding grooves of the two side mold units communicate with each other to from a feeding channel.

In an embodiment, the feeder further includes a driving unit configured to drive the mixing unit and the extrusion unit to move horizontally, so the mixing unit couples with or detaches from the feeding channel.

In an embodiment, the feeder further includes a lifting unit configured to drive the mixing unit and the extrusion unit to move upward or downward with respect to the feeding channel.

In an embodiment, each of the feeder and the pressing mold unit is equipped with a thermal device. The thermal device is configured to keep the sole material in the supercritical fluid state during the feeder feeds the sole material into the mold cavity.

Compared with the prior art, the automatic shoe-making device of the invention can automatically combine or position the mold units before feeding the sole material, so as to effectively reduce the working hour for assembling/disassembling the molds, to improve the position precision, and to substantially promote the production throughput. Moreover, the automatic shoe-making device of the invention can effectively modulate the temperature of the mold to the hot-press temperature or the mold-release temperature by the thermal device to facilitate the hot-press or mold-release process. In addition, the automatic shoe-making device of the invention can achieve fast change of different sized molds by pneumatic joint between the mold and the mold base, so as to facilitate the manufacture of shoe products or shoe components of different sizes. Furthermore, the automatic shoe-making device of the invention can sequentially convey a plurality of bottom mold units by the conveying unit to achieve a substantially uninterrupted production of shoe products or shoe components, improving the feasibility of mass production.

### BRIEF DESCRIPTION OF THE DRAWINGS

FIG. 1 is a schematic view of the automatic shoe-making device in an embodiment of the invention.
FIG. 2 to FIG. 8 are schematic views of the automatic shoe-making device of FIG. 1 in different operation states, wherein FIG. 3 is a schematic view of the automatic shoe-making device of FIG. 2 from a different viewing angle, FIG. 4B is a schematic view of the automatic shoe-making device of FIG. 4A from a different viewing angle, and FIG. 7B is a partially enlarged schematic view of FIG. 7A.
FIG. 9A is a schematic view of the side molds in an embodiment of the invention.
FIG. 9B is a schematic view of the side mold base and the side mold of the side mold unit in an embodiment of the invention.
FIG. 9C is a block diagram of the side mold base in an embodiment of the invention.
FIG. 10A is a schematic view of the sole supply unit in an embodiment of the invention.
FIG. 10B is a schematic view of the feeder in an embodiment of the invention.
FIG. 11 is a schematic view of the automatic shoe-making device in another embodiment of the invention.
FIG. 12 is a control block diagram of the automatic shoe-making device in an embodiment of the invention.
FIG. 13 is a schematic view of the automatic shoe-making device in another embodiment of the invention.
FIG. 14 to FIG. 16 are schematic views showing the material supply operation of the feeding unit of FIG. 13.
FIG. 17 to FIG. 22 are schematic views of the automatic shoe-making device of FIG. 13 in different operation states.
FIG. 23A to FIG. 23C are schematic views of the pressing mold units with different feeding channels.
FIG. 24A and FIG. 24B are schematic views of the side molds in different embodiments of the invention.
FIG. 25 to FIG. 30 are schematic views of the automatic shoe-making device equipped with the side molds of FIG. 24A in different operation states.

### DETAILED DESCRIPTION OF THE PREFERRED EMBODIMENT

In the drawings, the thickness of layers, films, panels, regions, etc., are exaggerated for clarity. Like reference numerals designate like elements throughout the specification. It will be understood that when an element such as a layer, film, region, or substrate is referred to as being "on" or "connected to" another element, it can be directly on or connected to the other element or intervening elements may also be present. In contrast, when an element is referred to as being "directly on" or "directly connected to" another element, there are no intervening elements present. As used herein, "connection" can be referred to physical or electrical connection. Moreover, "electrically connecting" or "coupling" can have other elements between two elements.

It should be understood that, even though the terms such as "first", "second", "third" may be used to describe an element, a part, a region, a layer and/or a portion in the present specification, but these elements, parts, regions, layers and/or portions are not limited by such terms. Such terms are merely used to differentiate an element, a part, a region, a layer and/or a portion from another element, part, region, layer and/or portion. Therefore, in the following discussions, a first element, portion, region, layer or portion may be called a second element, portion, region, layer or portion, and do not depart from the teaching of the present disclosure.

The terminology used herein is only for the purpose of describing particular embodiments and is not restrictive. As used herein, unless the content clearly indicates, the singular forms "a", "an", and "the" are intended to include the plural forms, including "at least one." "Or" means "and/or". As used herein, the term "and/or" includes any and all combinations of one or more of the associated listed items. It should also be understood that when used in this specification, the terms "comprising" and/or "including" specify the presence or addition of the described features, regions, wholes, steps, operations, elements and/or components, but do not exclude one or the presence or addition of multiple other features, regions, wholes, steps, operations, elements, components, and/or combinations thereof.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the disclosure, and will not be interpreted in an idealized or overly formal sense unless expressly so defined herein.

The invention provides an automatic shoe-making device, which can be applied to the manufacture of shoe components (such as sole components) and/or integral shoe products (such as knitted shoes). For example, the shoe component can include an outsole, a midsole, a midsole with a patch, an integral sole with a midsole and an outsole, an integral sole with an outsole, a midsole and a patch, an outsole with a patch, but not limited thereto. The shoe product can include an integral shoe product with an upper and a midsole, an integral shoe product with an upper and a midsole with a patch, an integral shoe product with an upper and a sole including a midsole and an outsole, an integral shoe product with an upper and a sole including an outsole and a midsole with a patch, but not limited thereto. Hereinafter, the automatic shoe-making device of the invention and the operation thereof will be described in detail with reference to the drawings.

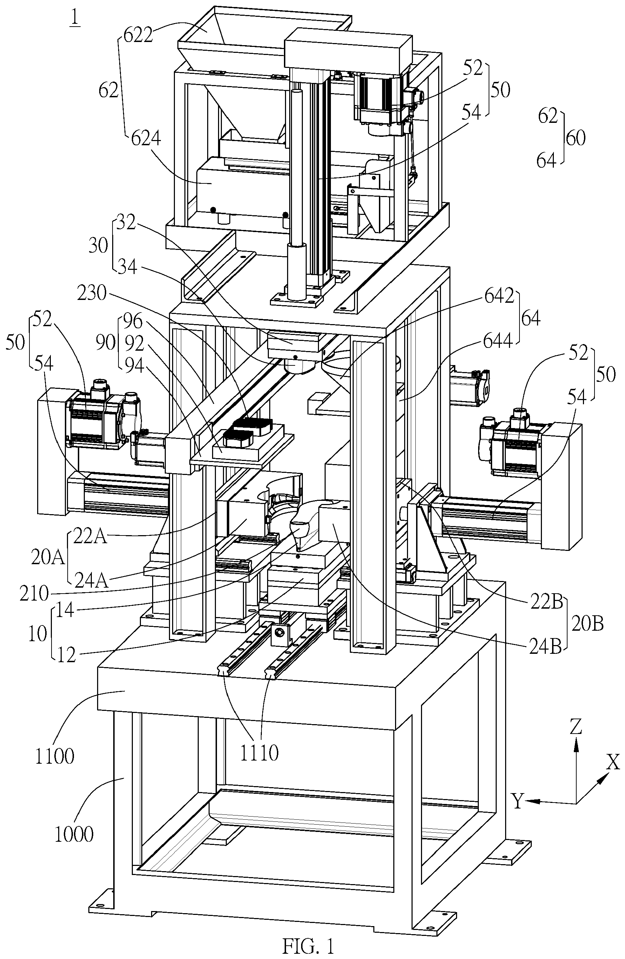

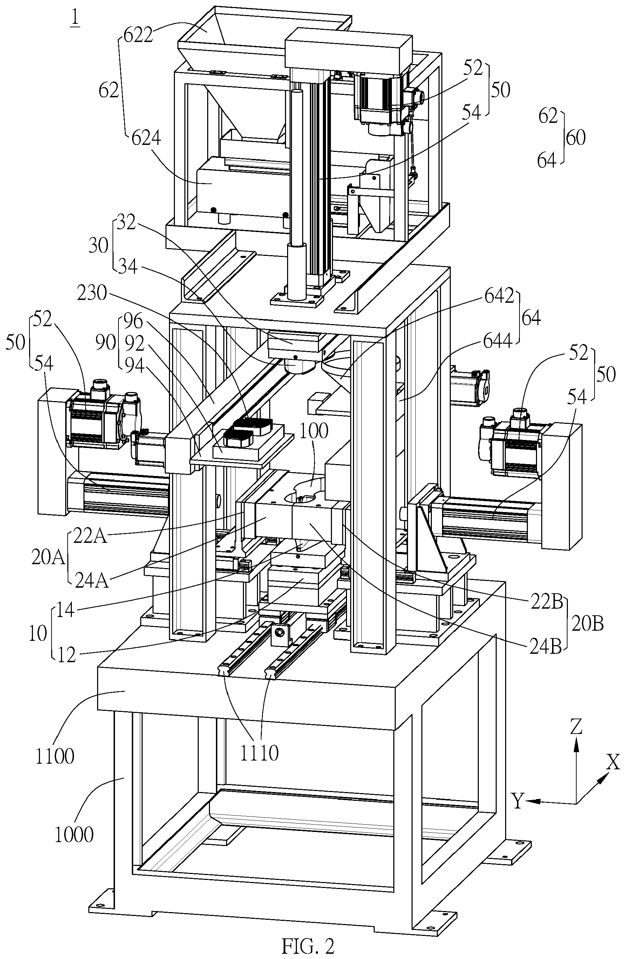

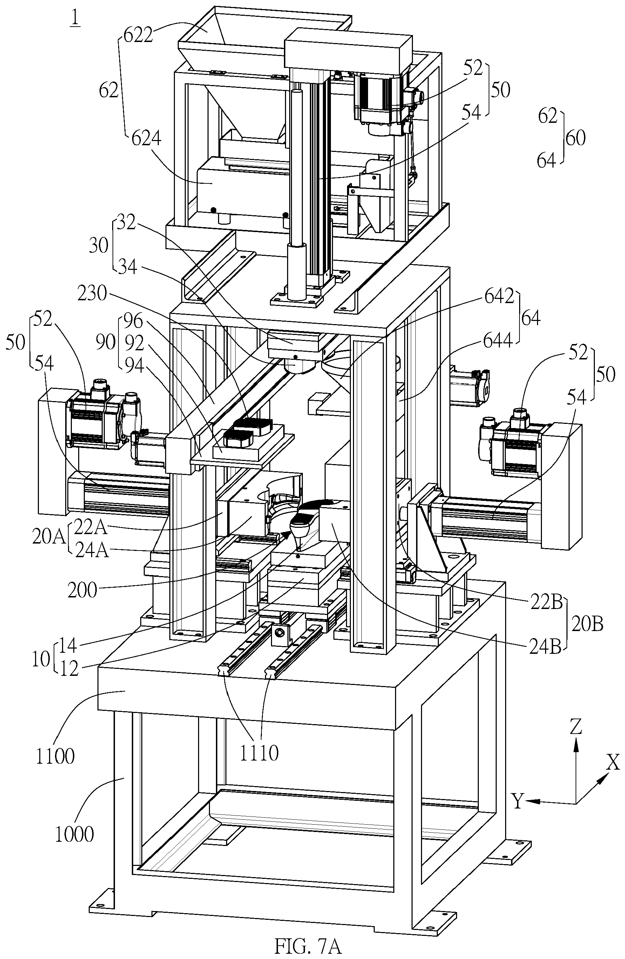

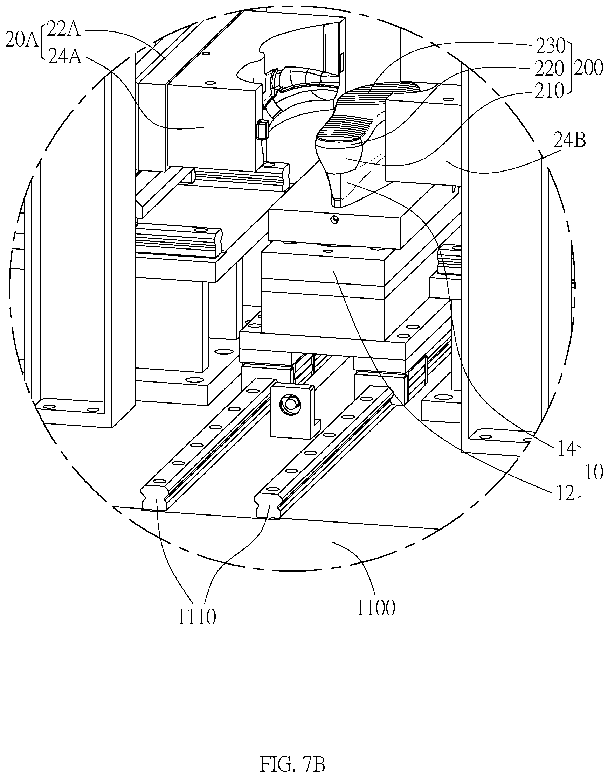

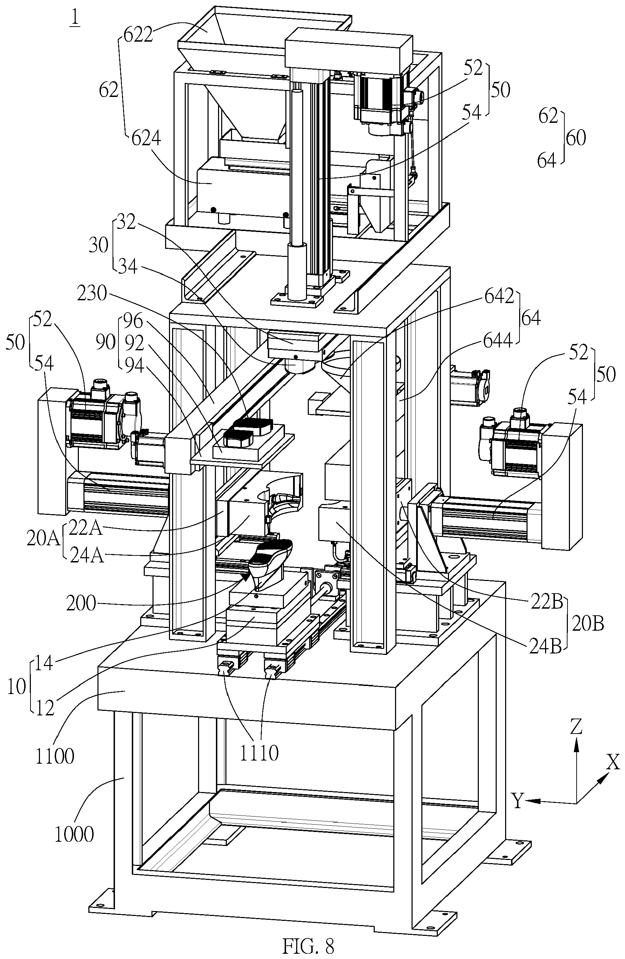

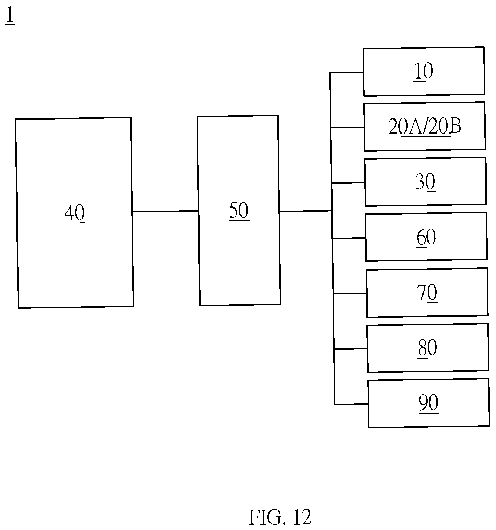

As shown in FIG. 1 and FIG. 2, in an embodiment, the automatic shoe-making device 1 includes a bottom mold unit 10, two side mold units 20A and 20B, a pressing mold unit 30, and a control unit 40 (shown in FIG. 12). The bottom mold unit 10 includes a shoe last 14, and the shoe last 14 is configured to selectively receive an upper 210 (shown in FIG. 1 or FIG. 7B). The two side mold units 20A and 20B are disposed at two sides of the bottom mold unit 10 and can be driven to combine with or separate from each other along a first direction, such as Y-axis direction (for example, FIG. 1 shows the separation configuration, and FIG. 2 shows the combined configuration). The pressing mold unit 30 can be driven to move relative to the bottom mold unit 10 along a second direction, such as Z-axis direction, and the second direction is perpendicular to the first direction. The control unit 40 is configured to control movements of the two side mold units 20A and 20B and the pressing mold unit 30. For example, the control unit 40 can be configured to: (1) control the two side mold units 20A and 20B to move toward the bottom mold unit 10 to form the combined configuration, so the two side mold units 20A and 20B surround the shoe last 14 to together form a mold cavity 100 (shown in FIG. 2) in which a sole material can be disposed, (2) control the pressing mold unit 30 to move toward the bottom mold unit 10 to hot-press the sole material disposed in the mold cavity 100 to form the shoe product or the shoe component (shown in FIG. 7A, FIG. 7B, or FIG. 8), and (3) control the pressing mold unit 30 and the two side mold units 20A and 20B to move away from the bottom mold unit 10 to allow the shoe product or the shoe component to be removed from the shoe last 14 (shown in FIG. 7A, FIG. 7B or FIG. 8).

Specifically, the automatic shoe-making device 1 can include at least one driving unit 50. The control unit 40 is configured to control the at least one driving unit 50, so the at least one driving unit 50 drives the two side mold units 20A and 20B and the pressing mold unit 30 to move, respectively. For example, the two side mold units 20A and 20B and the pressing mold unit 30 each is connected to a corresponding driving unit 50, and the corresponding driving unit 50 is connected to the control unit 40. The control unit 40 can independently control the driving units 50 of the two side mold units 20A and 20B and the pressing mold unit 30 according to the process settings, so the two side mold units 20A and 20B and the pressing mold unit 30 can perform the required operations of the process. For example, the control unit 40 can be a central processing unit (CPU) or a host computer, which is equipped with necessary software and/or hardware for controlling each unit of the automatic shoe-making device to perform the shoe-making process. The driving unit 50 can be any suitable driving device, which can provide power to drive the corresponding unit to move. In an embodiment, the driving unit 50 can include driving means 52 and a driving shaft 54. The driving means 52 is configured to provide power, and the driving shaft 54 is connected between the driving means 52 and the corresponding unit (e.g. the side mold unit 20A or 20B, the pressing mold unit 30) and configured to transmit the power of the driving means 52 to move the corresponding unit. For example, the driving means 52 can be a pneumatic or hydraulic driver, a stepper motor, a ball screw drive, a servo motor, etc., but not limited thereto. In addition, according to practical applications, the driving unit 50 can further include a speed control device, which is configured to control the moving speed of the corresponding unit, so the corresponding unit can move smoothly without sudden unintended acceleration.

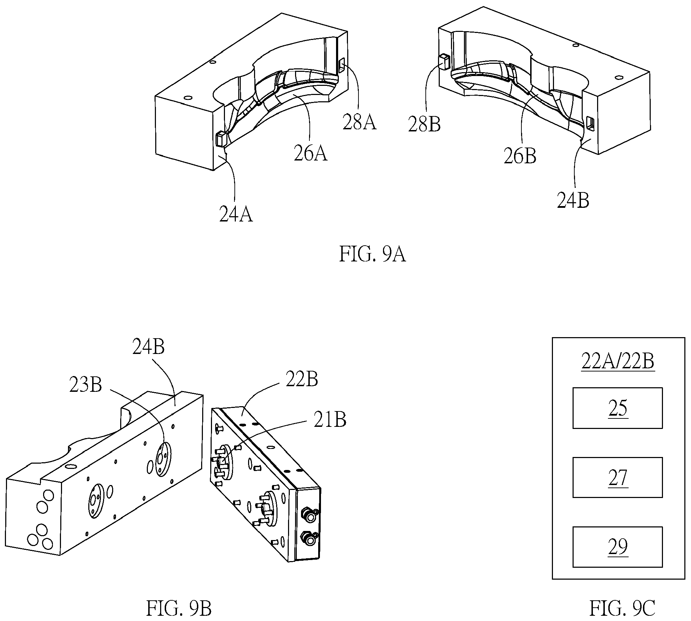

Each mold unit can include a mold base and a mold. The mold base and the mold are preferably detachably coupled to each other. Specifically, each of the two side mold units 20A and 20B can include a side mold base (e.g. 22A, 22B) and a side mold (e.g. 24A, 24B), and the side mold base 22A (or 22B) and the side mold 24A (or 24B) are detachably combined with each other. The pressing mold unit 30 can include a pressing mold base 32 and a pressing mold 34, and the pressing mold base 32 and the pressing mold 34 are detachably combined with each other. The bottom mold unit 10 can include a bottom mold base 12, and the bottom mold base 12 and the shoe last 14 are detachably combined with each other. The side mold base 22A (or 22B) and the side mold 24A (or 24B), the pressing mold base 32 and the pressing mold 34, or the bottom mold base 12 and the shoe last 14 are preferably combined with each other in a pneumatic joint manner. Referring to FIG. 9B, taking the side mold unit 20B as an example, the side mold base 22B and the side mold 24B respectively have corresponding coupling portions 21B and 23B. By controlling the air (or gas) pressure, the side mold base 22B and the side mold 24B can be quickly combined or detached. For example, the side mold base 22B and the side mold 24B can be pressurized with air or gas, so the corresponding coupling portions 21B and 23B can be tightly connected. On the other hands, the side mold base 22B and the side mold 24B can be depressurized, so the corresponding coupling portions 21B and 23B are detachable from each other. As such, molds of different sizes (or models) can be fast changed to facilitate the manufacture of the shoe products or the shoe components of different sizes (or different models). Specifically, the side mold base 22B and the side mold 24B preferably have two sets of corresponding coupling portions 21B and 23B (i.e., two pneumatic coupling points), and the distances between the two sets of coupling portions 21B and 23B corresponding to the side mold base 22B and the side molds 24B of different sizes are the same. Taking the center of the relative positions of the two sets of coupling portions 21B and 23B as the origin point of the mold (e.g. the side mold 24B), the mold of different size (or model) (e.g. the side mold 24B) can be fast changed by the pneumatic joint, so the same mold base (e.g. the side mold base 22B) can be detachably combined with molds of different sizes (or models) (e.g. the side mold 24B), and the mold (e.g. the side mold 24B) can be positioned at the origin point. In FIG. 9B, though the side mold unit 20B is illustrated for explanation of the pneumatic joint of the mold base and the mold, but not limited thereto. According to practical applications, the mold base and the mold can be coupled by any detachable means as appropriate, such as engaging, screwing. In addition, though not shown, the side mold unit 20A can have a similar coupling mechanism as the side mold unit 20B, and the coupling mechanism between the pressing mold base 32 and the pressing mold 34, or between the bottom mold base 12 and the shoe last 14 can also be similar to the coupling portions 21B and 23B, so a same mold base (e.g. the pressing mold base 32 or the bottom mold base 12) can be configured to quickly couple with the mold of different size or model (e.g. the pressing mold 34 or the shoe last 14) and position the mold at the origin point as described above.

Moreover, at least one of the side mold bases 22A, 22B, the pressing mold base 32, and the bottom mold base 12 has a thermal device (such as 25, 27) and a thermal sensor (such as 29). The thermal device modulates the temperature of the at least one of the side mold bases 22A, 22B, the pressing mold base 32, and the bottom mold base 12 to the hot-press temperature or the mold-release temperature based on the temperature sensed by the thermal sensor. Specifically, as shown in FIG. 1, FIG. 2, and FIG. 9C, in this embodiment, taking the side mold base 22A (or 22B) as an example, the side mold base 22A (or 22B) can include a heating device 25 and a cooling device 27 as the thermal device and a thermal sensor 29. The control unit 40 can control the operation of the heating device 25 or the cooling device 27 based on the temperature sensed by the thermal sensor 29, so the temperature of the side mold base 22A, 22B (and the side mold 24A, 24B) can reach the hot-press temperature or the mold-release temperature set by the process parameters. For example, the mold (e.g. the side mold 24A, 24B, the pressing mold 34, the shoe last 14) is preferably made of thermal conductive material, such as metal materials, particularly aluminum or aluminum alloy, so the temperature of the mold base (the side mold base 22A, 22B, the pressing mold base 32, the bottom mold base 12) can be modulated by the thermal device (e.g. the heating device 25, the cooling device 27) to facilitate the hot-press process as well as the mold-release process. In an embodiment, the heating device 25 can be embodied as a heater, which can convert electric energy into thermal energy or introduce hot fluid to provide thermal energy. The cooling device 27 can be embodied as a condenser, which can introduce coolant (or cool fluid) for cooling. The thermal sensor 29 can be embodied as a temperature sensor, which is configured to sense the temperature of the mold base or the mold. When the hot-press process is performed, the heating device 25 is operated to increase the temperature of the mold base (and the mold) to the hot-press temperature, such as 120°C to 150°C. When the mold-release process is performed, the cooling device 27 is operated to decrease the temperature of the mold base (and the mold) to the mold-release temperature, such as 70°C to 90°C. It is moted that the hot-press temperature or the mold-release temperature can be modified according to practical applications (such as the property of sole material). In addition, though not shown, the pressing mold base 32 or the bottom mold base 12 can also have the thermal device and the thermal sensor similar to those of the side mold base 22A, 22B so as to achieve the desired hot-press temperature or mold-release temperature as described above.

As shown in FIG. 1 and FIG. 2, in this embodiment, the bottom mold unit 10 includes one shoe last 14, but no limited thereto. According to practical applications, the bottom mold unit 10 can include one or more shoe lasts 14 (for example, the bottom mold unit can include only one shoe last, or two or more same or different shoe lasts). The side mold 24A, 24B corresponds to the shoe last 14 in number and shape. When the two side mold units 20A and 20B move toward the bottom mold unit 10 to form the combined configuration, the two side molds 24A and 24B surround the shoe last 14 to together define the mold cavity 100. In an embodiment, when the bottom mold unit 10 includes two or more shoe lasts 14, the two side molds 24A and 24B surround the shoe lasts 14 to form two or more mold cavities 100, and it is preferred that the mold cavities 100 do not communicate with each other, so two or more separated (or independent) shoe products or shoe components can be manufactured, eliminating the subsequent processes of separation and trim. Moreover, as shown in FIG. 9A, it is preferred that alignment or coupling portions 28A and 28B are provided between the two side molds 24A and 24B. When the two side mold units 20A and 20B move toward the bottom mold unit 10 to form the combined configuration, the coupling portions 28A and 28B of the two side molds 24A and 24B are coupled to each other to achieve the positioning state. In an embodiment, the coupling portions 28A and 28B can be a pair of convex and concave portions. When the two side molds 24A and 24B are combined with each other, the convex portion correspondingly extends into the convex portion for positioning or engaging. Moreover, as shown in FIG. 9A, the side mold 24A, 24B can selectively have a receiving portion 26A, 26B, which is configured to accommodate the patch. For example, the receiving portion 26A, 26B can be a recessed groove formed in the side mold 24A, 24B. In the case that the midsole (or outsole) is to be formed with the patch for decoration or identification, the patch is firstly disposed in the receiving portion 26A, 26B of the side mold 24A, 24B. When the two side mold units 20A and 20B move toward the bottom mold unit 10 to form the combined configuration, the patch received in the receiving portion 26A, 26B is adjacent to the mold cavity 100. When the sole material disposed in the mold cavity 100 is hot-pressed to form the shoe product or the shoe component, the patch is embedded in the side face of the midsole (or outsole) of the shoe product or the shoe component.

As shown in FIG. 1 and FIG. 2, the bottom mold unit 10 is preferably disposed in the operation zone of the automatic shoe-making device 1 to facilitate the automatic shoe-making operation. Specifically, the operation zone refers to an intersection area defined by the moving directions of the pressing mold unit 30 and the two side mold units 20A and 20B, such as the intersection area of the Y-axis direction and the Z-axis direction. In an embodiment, the bottom mold unit 10 can be fixedly located in the operation zone, but not limited thereto. In another embodiment, the bottom mold unit 10 can be movable along a third direction (e.g. the X-axis direction) to get close to or away from the operation zone. The third direction is perpendicular to the first direction and the second direction. As such, the pressing mold unit 30 and the two side mold units 20A and 20B are driven to move relative to the bottom mold unit 10 located in the operation zone.

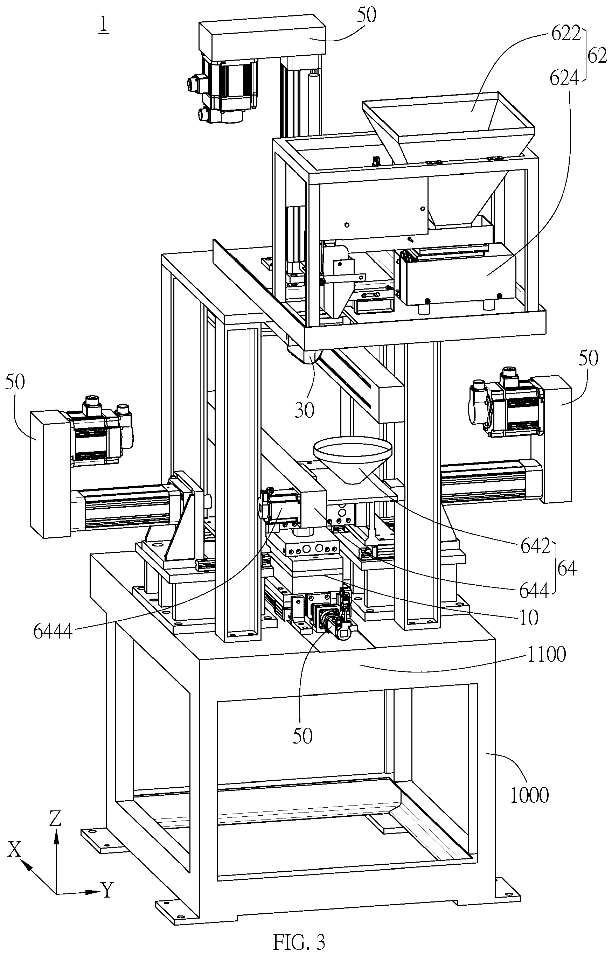

Specifically, the automatic shoe-making device 1 can include a stage 1000, which is configured to support the bottom mold unit 10, the side mold units 20A and 20B, and the pressing mold unit 30. The control unit 40 can be selectively disposed on the stage 1000 or separated from the stage 1000. The stage 1000 can include a tabletop 1100, and the operation zone is an area on the tabletop 1100. The bottom mold unit 10, the side mold units 20A and 20B, and the pressing mold unit 30 are respectively disposed on the tabletop 110 corresponding to the operation zone. In this embodiment, the tabletop 1100 is provided with rails 1110, which extends along the third direction (e.g. the X-axis direction) and is configured to guide the movement of the bottom mold unit 10, so the bottom mold unit 10 can move to the operation zone or move away from the operation zone along the rails 1110. As shown in FIG. 3, the control unit 40 can control the driving unit 50 coupled to the bottom mold unit 10, so the driving unit 50 drives the bottom mold unit 10 to move along the third direction (e.g. the X-axis direction). In this embodiment, the driving unit 50 of the bottom mold unit 10 can only include the driving means, such as a pneumatic or hydraulic driver, a stepper motor, a ball screw drive, a servo motor, etc., but not limited thereto. In another embodiment, according to practical applications, the driving unit 50 of the bottom mold unit 10 can include the driving means described above and any suitable components (such as transmission component or speed controller). When the bottom mold unit 10 is driven by the driving unit 50 to move along the rails 1110 away from the operation zone, i.e., the bottom mold unit 10 is not confined by the side mold units 20A and 20B and the pressing mold unit 30 in the Y-axis direction and the Z-axis direction, it facilitates the operation of disposing the upper (e.g. 210) on the shoe last 14 or the mold-release operation of removing the shoe product (e.g. 200) or the shoe component (e.g. midsole 220 or outsole 230) from the shoe last 14.

As shown in FIG. 2 and FIG. 3, the automatic shoe-making device 1 further includes a feeding unit 60. The feeding unit 60 is movable relative to the bottom mold unit 10 and configured to feed the sole material into the mold cavity 100. In an embodiment, the feeding unit 60 can include a sole material supplier 62 and a feeder 64 . The sole material supplier 62 is configured to supply the sole material to the feeder 64, and the feeder 64 is movable relative to the mold cavity 100 to feed the sole material into the mold cavity 100 through the feeder 64. In an embodiment, the sole material supplier 62 can include a sole material container 622 and a dispenser 624. The sole material container 622 is configured to contain the sole material, and the dispenser 624 is configured to dispense the sole material to the feeder 64 in a predetermined amount. For example, the sole material supplier 62 can be disposed at one side of the pressing mold unit 30, such as one side in the X-axis direction. The control unit 40 can control the dispenser 624 to dispense the sole material of predetermined amount from the sole material container 622 to the feeder 64 (such as feeding funnel 642). The control unit 40 can further control the movement of the feeder 64 based on the process parameters, so the sole material is fed into the mold cavity 100 through the feeder 64.

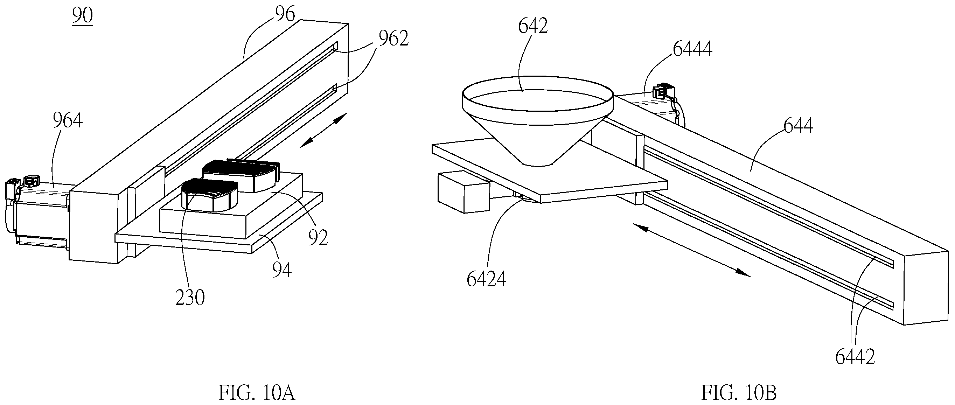

As shown in FIG. 10B, in an embodiment, the feeder 64 can include a feeding funnel 642 and a funnel rack 644. The feeding funnel 642 is preferably movably disposed on the funnel rack 644. The funnel rack 644 is preferably disposed along the third direction (e.g. the X-axis direction). The funnel rack 644 can include a guiding channel 6442 and a driving device 6444. The guiding channel 6442 extends along the third direction and is configured to guide the movement of the feeding funnel 642 in and out of the operation zone along the third direction. The driving device 6444 functions similar to the driving unit 50 and is configured to provide power to drive the feeding funnel 642 to move along the guiding channel 6442. As such, the feeding funnel 642 can move to a position below the sole material supplier 62 for loading the sole material or to a position above the mold cavity 100 for feeding the sole material into the mold cavity 100. In this embodiment, the feeding funnel 642 can be equipped with a switch 6424, such as a control valve. When the switch 6424 is closed, the feeding funnel 642 can have a closed bottom for loading the sole material. When the switch 6424 is opened, the feeding funnel 642 can have an opened bottom for feeding the sole material into the mold cavity 100. In an embodiment, during feeding the sole material into the mold cavity 100, the feeding funnel 642 is preferably movable back and forth with respect to the mold cavity 100, so the feeding funnel 642 can move in the operation zone. That is, when the feeding funnel 642 moves along the third direction to feed the sole material, the fed sole materials substantially completely fall into the mold cavity 100, so as to uniformly inject the sole material from above the bottom mold unit 10 into the mold cavity 100. In this embodiment, the control unit 40 can control the operation of the feeding unit 60 and the supplied amount of the sole material according to the process conditions, so as to achieve precise control of the quality and quantity of finished products.

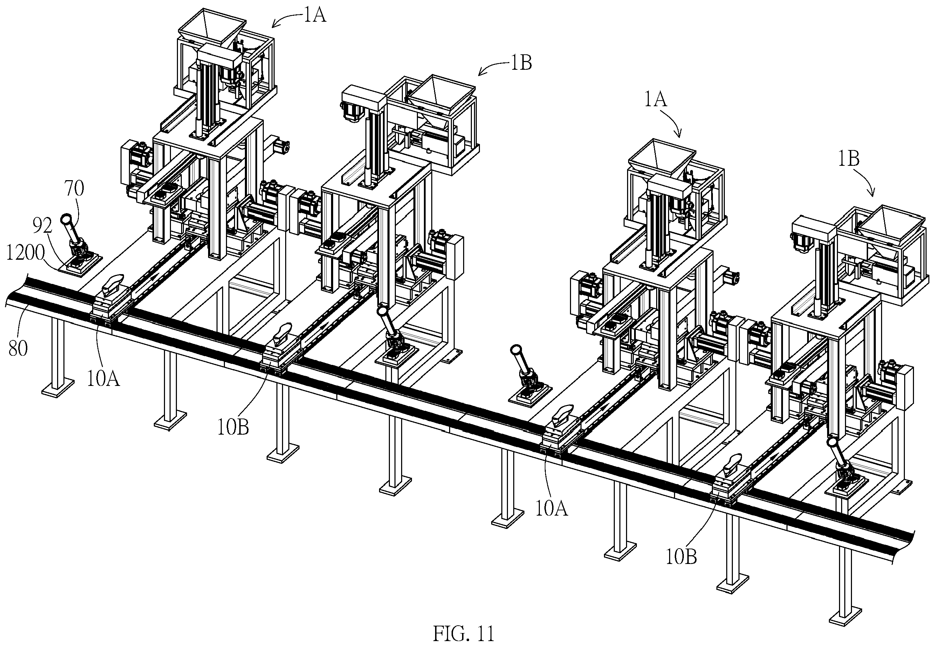

The pressing mold unit 30 can be further provided with the outsole. In an embodiment, the automatic shoe-making device 1 can further include a sole supply base 92, which is configured to accommodate an outsole 230. The sole supply base 92 is movable to be located right below the pressing mold unit 30, so as to allow the pressing mold unit 30 to pick up the outsole 230 from the sole supply base 92. Referring to both FIG. 1 and FIG. 10A, in an embodiment, the automatic shoe-making device 1 can further include an outsole supply unit 90. The outsole supply unit 90 includes the sole supply base 92, a support plate 94, and an outsole rack 96. The sole supply base 92 is configured to accommodate the outsole 230 and disposed on the support plate 94. The support plate 94 is movably disposed on the outsole rack 96 to carry the sole supply base 92 to move relative to the outsole rack 96. Similar to the funnel rack 644, the outsole rack 96 includes a guiding channel 962 and a driving device 964. The guiding channel 962 extends along the third direction and is configured to guide the movement of the sole supply base 92 (or the support plate 94) in and out of the operation zone along the third direction. The driving device 964 functions similar to the driving unit 50 and is configured to provide power to drive the sole supply base 92 (or the support plate 94) to move along the guiding channel 962. As such, the sole supply base 92 can move to a position below the pressing mold unit 30 for the pressing mold unit 30 picking up the outsole 230 or to a position outside of the operation zone for disposing the outsole 230 manually or automatically (such as by a robot arm 70 shown in FIG. 11). As shown in FIG. 1, the feeding unit 60 and the outsole supply unit 90 (i.e., the sole supply base 92) are preferably disposed at two opposite sides with respect to the pressing mold unit 30 in the third direction (e.g. the X-axis direction). In this embodiment, the sole supply base 92 and the feeding unit 60 (i.e., the feeding funnel 642) are preferably movable relative to each other along the third direction, so the sole supply base 92 moves to be located right below the pressing mold unit 30, and the feeding funnel 642 of the feeding unit 60 moves to be located below the sole supply base 92 and to align with the mold cavity 100. When the pressing mold unit 30 picks up the outsole 230, the feeding funnel 642 of the feeding unit 60 can feed the sole material into the mold cavity 100 simultaneously.

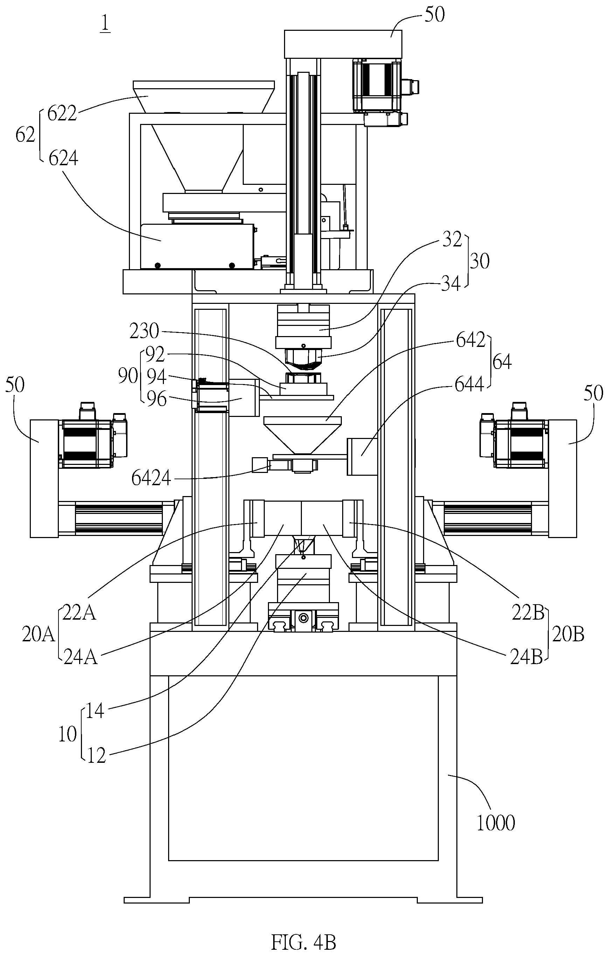

Specifically, as shown in FIG. 1, the outsole supply unit 90 and the feeder 64 are preferably disposed along the Y axis direction at two sides of the operation zone (e.g. left side and right side) and along the X-axis direction at two sides of the operation zone (e.g. front side and rear side). Moreover, as shown in FIG. 4B, the outsole supply unit 90 and the feeder 64 are preferably disposed along the Z-axis direction (e.g. upper side and lower side). When the sole supply base 92 and the feeding funnel 642 both move to the operation zone, the pressing mold unit 30, the sole supply base 92, the feeding funnel 642, and the mold cavity 100 surrounded by the two side mold units 20A and 20B and the shoe last 14 are aligned in the Z-axis direction. As such, the operation of picking up the outsole 230 and the operation of injecting (or feeding) the sole material can be performed at the same time, so as to reduce the process time.

In an embodiment, as shown in FIG. 11, the automatic shoe-making device 1 can further include a robot arm 70, which is movable between a loading position and a pick-up ready position. The robot arm 70 is configured to automatically transfer the sole supply base 92 with the outsole 230 accommodated thereon from the loading position to the pick-up ready position, so the pressing mold unit 30 is allowed to pick up the outsole 230. Specifically, the sole supply base 92 is selectively disposed on the support plate 94 or the support frame 1200. The support frame 1200 is preferably disposed at any suitable position outside the tabletop 1100 for loading the outsole 230, but not limited thereto. In another embodiment, the support frame 1200 can be integrated with the stage 1000, so the support frame 1200 can be an extension portion of the tabletop 1100. When the sole supply base 92 is disposed on the support frame 1200 (i.e., at the loading position), the outsole 230 can be loaded on the sole supply base 92 manually or automatically by the robot arm 70. After the outsole 230 is loaded, the robot arm 70 can transfer the sole supply base 92 with the outsole 230 thereon from the support frame 1200 to the support plate 94 (i.e., the pick-up ready position). Then, the driving device 964 drives the support plate 94 to move the sole supply base 92 to be located right below the pressing mold unit 30 for the pressing mold unit 30 to pick up the outsole 230. It is noted that the robot arm 70 preferably picks up the sole supply base 92 or the outsole 230 in a suction manner (such as vacuum suction), but not limited thereto.

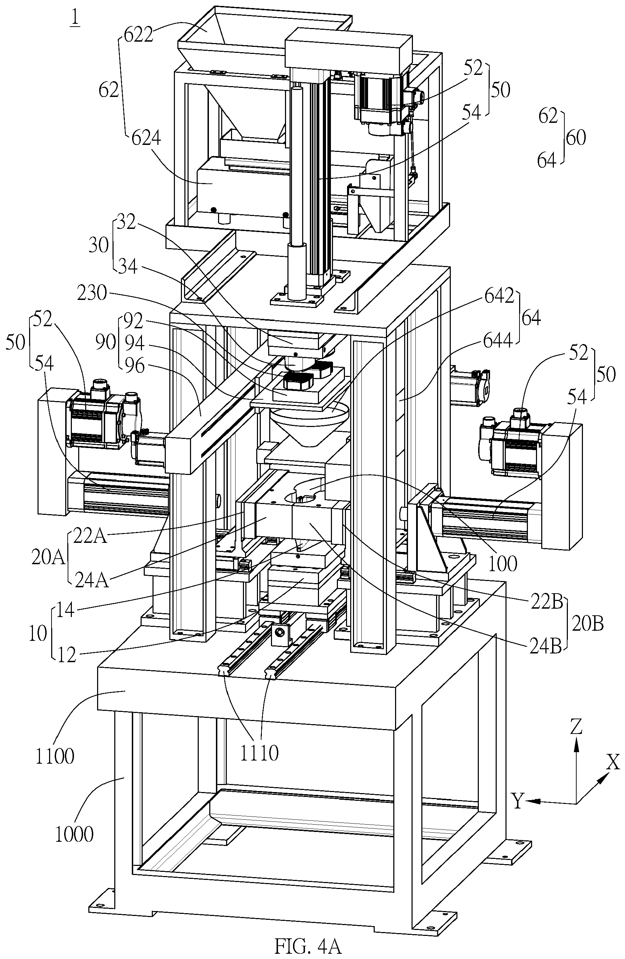

Hereinafter, referring to FIG. 1 to FIG. 8, the operation of the automatic shoe-making device 1 of the invention will be described in detail, wherein FIG. 3 is a schematic view of the automatic shoe-making device of FIG. 2 from a different viewing angle, FIG. 4B is a schematic view of the automatic shoe-making device of FIG. 4A from a different viewing angle, and FIG. 7B is a partially enlarged schematic view of FIG. 7A. As shown in FIG. 1, the two side mold units 20A and 20B are preferably located at two sides of the operation zone in the separation configuration, and the pressing mold unit 30 is located above the operation zone, so as to facilitate the operation of setting the upper 210 on the shoe last 14 of the bottom mold unit 10 or the movement of the bottom mold unit 10 in and out of the operation zone. The bottom mold unit 10 is located in the operation zone of the automatic shoe-making device 1, so the vertical projections of the two side molds 24A, 24B in the first direction (e.g. Y-axis direction) covers the lateral surfaces of the shoe last 14, and the vertical projection of the pressing mold 34 in the second direction (e.g. Z-axis direction) overlaps the mold cavity 100. In this embodiment, the shoe last 14 can selectively receive the upper 210, such as knitted upper. The bottom mold unit 10 preferably moves to outside of the operation zone along the third direction (X-axis direction) for setting the upper 210 on the shoe last 14, and then moves to the operation zone along the third direction (X-axis direction) for forming the shoe product or shoe component. It is noted that when the shoe product or shoe component is to be formed with the patch, the patch can be disposed in the receiving portion 26A, 26B in the separation configuration (particularly in the state that the bottom mold unit 10 is located outside of the operation zone).

As shown in FIG. 2, the control unit 40 controls the two side mold units 20A and 20B to move toward the bottom mold unit 10 to form the combined configuration, so the two side mold units 20A and 20B surround the shoe last 14 to together form the mold cavity 100 for receiving the sole material. During the operations shown in FIG. 1 and FIG. 2, the control unit 40 can control the robot arm 70 to transfer the sole supply base 92 with the outsole 230 accommodated thereon from the loading position (i.e., the support frame 1200) to the pick-up ready position (i.e., the support plate 94 located outside of the operation zone). In another embodiment, the sole supply base 92 can be directly disposed at the pick-up ready position (i.e., the support plate 94 located outside of the operation zone), and the outsole 230 can be loaded on the sole supply base 92 manually or automatically (by the robot arm 70). That is, the sole supply base 92 is immovable, and only the outsole 230 is transferred. It is noted that when the shoe product or the shoe component to be formed without the outsole 230, the operation of transferring the sole supply base 92 or loading the outsole 230 can be omitted. Moreover, as shown in FIG. 3, in the meantime, the sole material supplier 62 of the feeding unit 60 can dispense a predetermined amount of the sole material from the sole material container 622 to the feeding funnel 642 of the feeder 64 by means of the dispenser 624. During this operation, the switch 6424 is closed, so the feeding funnel 642 can be loaded with the sole material of predetermined amount.

As shown in FIG. 4A and FIG. 4B, the control unit 40 controls the operations of the outsole supply unit 90 and the feeder 64, so the support plate 94 is driven by the driving device 964 to move with the sole supply base 92 along the guiding channel 962 in the third direction (X-axis direction) to be located right below the pressing mold unit 30, and the feeding funnel 642 loaded with the predetermined amount of sole material is driven by the driving device 6444 to move along the guiding channel 6442 in the third direction (X-axis direction) to be located above the operation zone. As such, in the Z-axis direction, the feeding funnel 642 is aligned with the mold cavity 100, and the pressing mold 34 is aligned with the outsole 230.

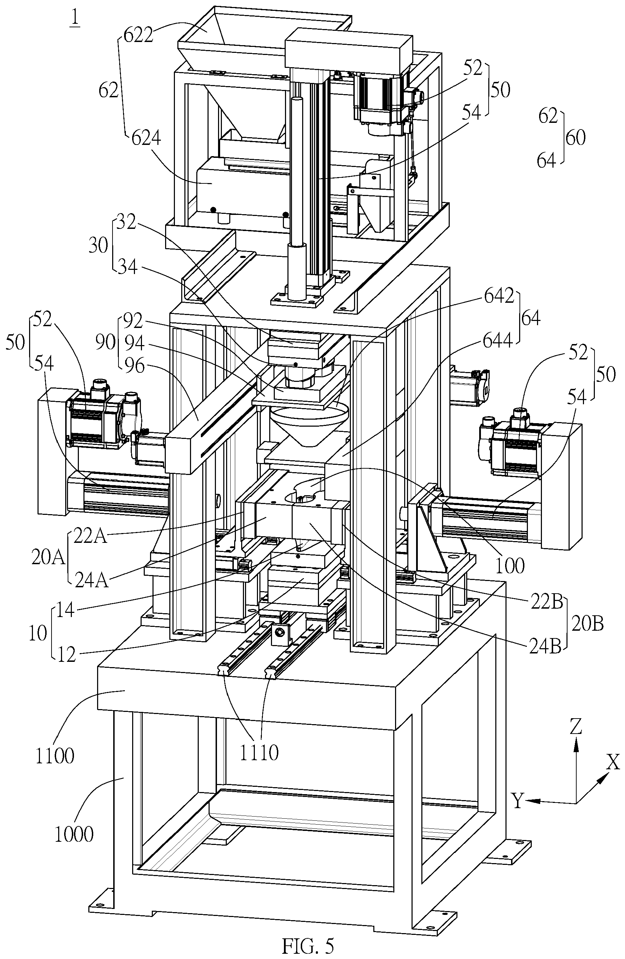

As shown in FIG. 5, the control unit 40 controls the pressing mold base 32 and the pressing mold 34 of the pressing mold unit 30 to move downward along the second direction (Z-axis direction) to pick up the outsole 230. Meanwhile, the control unit 40 controls the switch 6424 to open, so the sole material in the feeding funnel 642 can be fed into the mold cavity 100. In an embodiment, when the feeding funnel 642 is feeding the sole material into the mold cavity 100 (i.e., the switch 6424 is in the opened state), the control unit 40 can control the feeding funnel 642 to slightly move relative to the mold cavity 100, so as to uniformly distributing the sole material in the mold cavity 100, but not limited thereto. In an embodiment, the sole material can include foaming material, such as polyurethane (PU), thermoplastic polyurethane (TPU), expandable TPU (ETPU), thermoplastic ester elastomer (TPEE), thermoplastic elastomer (TPE), thermoplastic, nylon elastomer, ethylene-vinyl acetate (EVA) copolymer, or a mixer of foaming material and recycled material (such as including EVA copolymer, rubber, thermoplastic materials including PU, etc.), but not limited thereto. Moreover, the sole material can include the foaming materials of different grain sizes, and the feeding funnel 642 can feed the foaming materials of different grain sizes or the foaming materials in different densities according to different regions of the mold cavity 100, but not limited thereto. The pressing mold 34 preferably picks up the outsole 230 from the sole supply base 92 in a suction manner (e.g. vacuum suction), but not limited thereto. In another embodiment, the pressing mold 34 can have an accommodation groove for accommodating the outsole 230 in an engagement manner. It is noted that when the shoe product or component is to be formed without the outsole 230, the operation of picking up the outsole 230 can be omitted, and only the operation of feeding the sole material into the mold cavity 100 is performed.

After the pressing mold unit 30 picks up the outsole 230 from the sole supply base 92, and the sole material is disposed in the mold cavity 100, the control unit 40 controls the pressing mold base 32 and the pressing mold 34 to move upward along the second direction (Z-axis direction) to the high position. Then, the control unit 40 controls the outsole supply unit 90, so the supply plate 94 moves along the guiding channel 962 in the third direction (X-axis direction) to outside of the operation zone, and controls the feeder 64 to move the feeding funnel 642 along the guiding channel 6442 back to the sole material loading position, i.e., a position right below the sole material supplier 62 similar to FIG. 2 and FIG. 3, but the outsole 230 has been transferred to the pressing mold 34. In the meantime, the robot arm 70 can transfer the sole supply base 92 (without the outsole 230) from the pick-up ready position to the loading position for loading a next outsole 230.

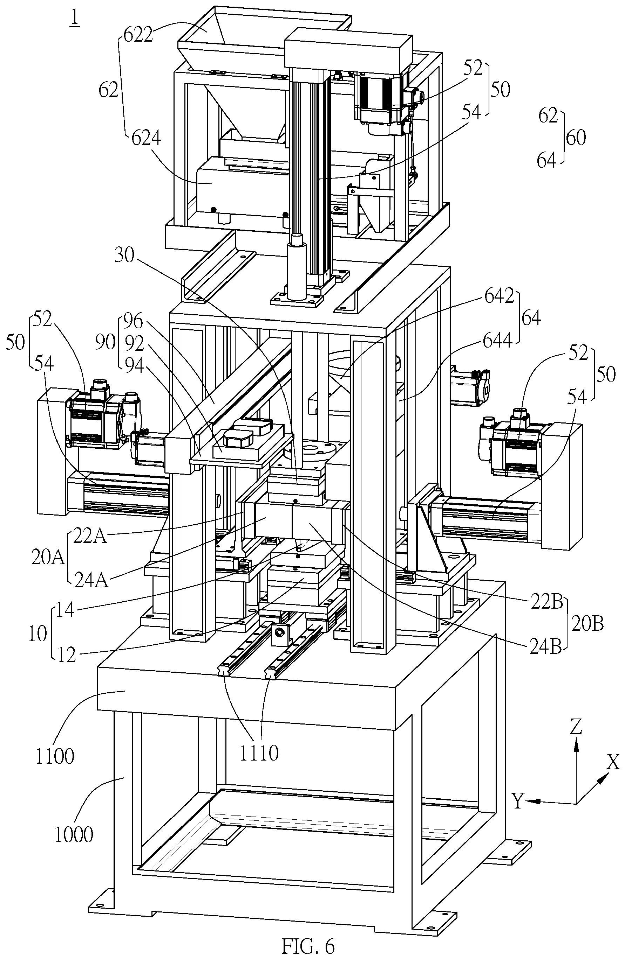

As shown in FIG. 6, the control unit 40 controls the pressing mold unit 30 to move toward the bottom mold unit 10 to hot-press the sole material disposed in the mold cavity 100 to form the shoe product or the shoe component. Specifically, when the hot-press process is performed, the heating device 25 of each mold base (e.g. the side mold bases 22A, 22B, the pressing mold base 32, the bottom mold base 12) is preferably operated to heat the mold base and the mold, so the temperature thereof reaches the hot-press temperature, i.e., a temperature that the foaming material can be soften and shaped, such as 120°C to 150°C. After the foaming material is hot-pressed and shaped, the cooling device 27 of each mold base (such as the side mold bases 22A, 22B, the pressing mold base 32, the bottom mold base 12) is preferably operated to cool the mold base and the mold, so the temperature thereof reaches the mold-release temperature, i.e., a temperature that the foaming material can be cooled and maintain the shape, such as 70°C to 90°C, and the foaming material can be integrated with the upper 210 and the outsole 230 (if exists) to form an integral shoe product or shoe component.

As shown in FIG. 7A and FIG. 7B, after the shoe product (e.g. 200) or the shoe component (e.g. midsole 220, outsole 230) is formed, the control unit 40 controls the pressing mold unit 30 and the two side mold units 20A and 20B to move away from the bottom mold unit 10 to allow the shoe product (e.g. 200) or the shoe component (e.g. midsole 220, outsole 230) to be removed from the shoe last 14. For example, in this embodiment, the automatic shoe-making device 1 can integrally form the shoe product 200, and the shoe product 200 is a knitted shoe with integral structure, which integrates the upper 210, the outsole 230, and the midsole formed by the foaming (sole) material, but not limited thereto. According to practical applications, the shoe product 200 can include an integral shoe product including the midsole 220 and the upper 210, an integral shoe product including the midsole 220, the outsole 230, and the upper 210, an integral shoe product including the midsole 220 with the patch and the upper 210, an integral product including the midsole 220 with the patch, the outsole 230 and the upper 210. In the case that the shoe last 14 is not provided with the upper 210, the automatic shoe-making device 1 is configured to form the shoe component including an outsole or a midsole formed by the foaming material, or a sole including a midsole and an outsole, a midsole with a patch, a sole including a midsole with a patch and an outsole, etc.

As shown in FIG. 8, the control unit 40 can further control the movement of the bottom mold unit 10, so the bottom mold unit 10 moves away from the operation zone along the third direction (X-axis direction) to a position that the vertical projections of the two side molds 24A, 24B in the first direction (Y-axis direction) preferably does not cover the lateral surfaces of the shoe last 14, and the vertical projection of the pressing mold 34 in the second direction (Z-axis direction) does not overlap the shoe last 14. As such, the operation space for mold-releasing can be increased. It is noted that during the hot-press operation and the mold-release operation, the operation of disposing the outsole 230 on the sole supply base 92 can be performed manually or automatically (by the robot arm 70) to reduce the production time.

The automatic shoe-making device 1 of the invention can automatically combine and position the mold units before feeding the sole material, effectively reducing the working hour for assembling/disassembling the molds, improving the position precision, and substantially promoting the production throughput. Moreover, the automatic shoe-making device 1 of the invention can effectively modulate the temperature of the mold to the hot-press temperature or the mold-release temperature by the thermal device, facilitating the hot-press or mold-release process. In addition, the automatic shoe-making device 1 of the invention can achieve fast change of different sized molds by pneumatic joint between the mold and the mold base, so as to facilitate the manufacture of shoe products or shoe components of different sizes.

The automatic shoe-making device can uninterruptedly operate to promote the production throughput. FIG. 11 is a schematic view of the automatic shoe-making device in another embodiment of the invention. As shown in FIG. 11, the automatic shoe-making device of the invention can further include a conveying unit 80. The conveying unit 80 is configured to convey the bottom mold unit (such as 10A, 10B) close to or away from the operation zone. Specifically, a plurality of automatic shoe-making devices 1A and 1B similar to the automatic shoe-making device 1 described above are arranged side by side and configured to manufacture a plurality of shoe products or shoe components at the same time. In this embodiment, four automatic shoe-making devices 1A and 1B are illustrated, wherein the automatic shoe-making device 1A is configured to manufacture the shoe product or shoe component for left foot, and the automatic shoe-making device 1B is configured to manufacture the shoe product or shoe component for right foot. As such, a pair of the automatic shoe-making devices 1A and 1B can manufacture a pair of shoe products or shoe components at the same time, but not limited thereto. In this embodiment, the automatic shoe-making device can further include a plurality of bottom mold units 10A and10B, wherein the bottom mold units 10A and 10B correspond to the shoe lasts for left foot and right foot, respectively. The conveying unit 80 sequentially conveys the plurality of bottom mold units 10 A and 10B to the operation zones of the corresponding automatic shoe-making devices 1A and 1B for manufacturing the shoe products or shoe components. For example, the conveying unit 80 can be embodied as a conveyor belt or a transport rail. The control unit 40 can control a corresponding driving unit 50 to enable the conveying unit 80 to sequentially convey the plurality of bottom mold units 10 A, 10B to the operation zones of corresponding automatic shoe-making devices 1A and 1B. As such, the automatic shoe-making device 1A, 1B can manufacture the shoe product or shoe component on the plurality of bottom mold units 10A, 10B sequentially conveyed by the conveying unit 80 in a substantially uninterrupted manner, so as to improve the feasibility of mass production. It is noted that in this embodiment, the conveying unit 80 can be embodied as a cycled conveying unit, so when the automatic shoe-making device 1A, 1B manufactures the shoe product (or component) on the bottom mold unit 10A, 10B located in the operation zone, the upper 210 can be set on the bottom mold unit 10A, 10B located outside of the operation zone and remove the shoe product 200( or shoe component) from the bottom mold unit 10A, 10B that moves away from the operation zone, to effectively promote the production throughput, but not limited thereto. According to practical applications, the conveying unit 80 can be a linear transport unit (such as a line transport unit), and after the mold-release operation, the bottom mold unit 10A, 10B can be again put into the operation of setting the upper 210 manually or automatically (by means of the robot arm).

It is noted that though FIG. 11 illustrates a plurality of automatic shoe-making devices 1A,1B arranged side by side to constitute two groups of automatic shoe-making devices, but not limited thereto. According to practical applications, only one automatic shoe-making device 1 (e.g. 1A or 1B) or one group of the automatic shoe-making devices (e.g. 1A and 1B) can work with the conveying unit 80 and multiple bottom mold units 10 (e.g. 10A and/or 10B) to achieve the uninterrupted production and increase the productivity.

FIG. 12 is a control block diagram of the automatic shoe-making device in an embodiment of the invention. As shown in FIG. 12, the control unit 40 controls one or more driving units 50 (or diving devices 6444, 964) to independently control each unit of the automatic shoe-making device, such as the bottom mold unit 10, the two side mold units 20A and 20B, the pressing mold unit 30, the feeding unit 60, the robot arm 70, the conveying unit 80, the outsole supply unit 90, but not limited thereto.

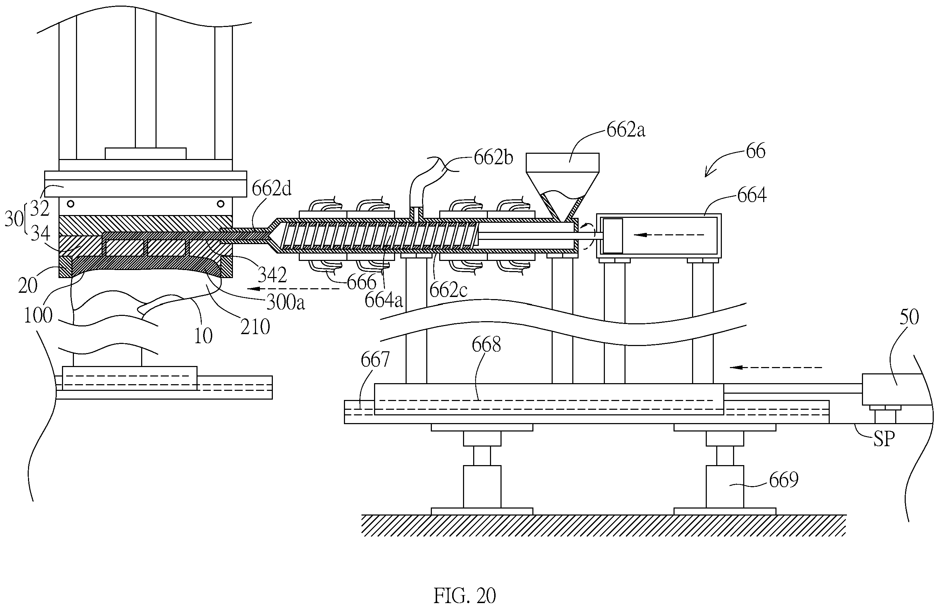

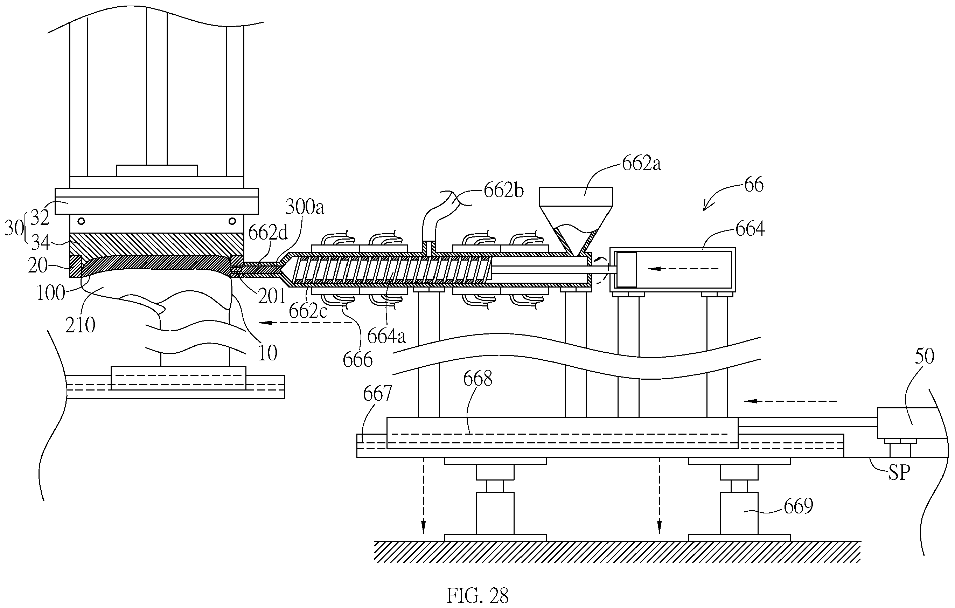

It is noted that in the above embodiments, the control unit 40 controls the pressing mold unit 30 to move toward the bottom mold unit 10 after the sole material is disposed in the mold cavity 100, but the invention is not limited thereto. In other embodiments, according to the state of the sole material and the design of the feeding unit, the control unit 40 can control the pressing mold unit 30 to move toward the bottom mold unit 10 before the sole material is disposed in the mold cavity 100, and the sole material can be fed into the mold cavity 100 through the feeding channel (e.g. 342 shown in FIG. 20 or 201 shown in FIG. 28) when the pressing mold unit 30 closes the mold cavity 100, so the pressing mold unit 30 can achieve the effect of hot-pressing the sole material.

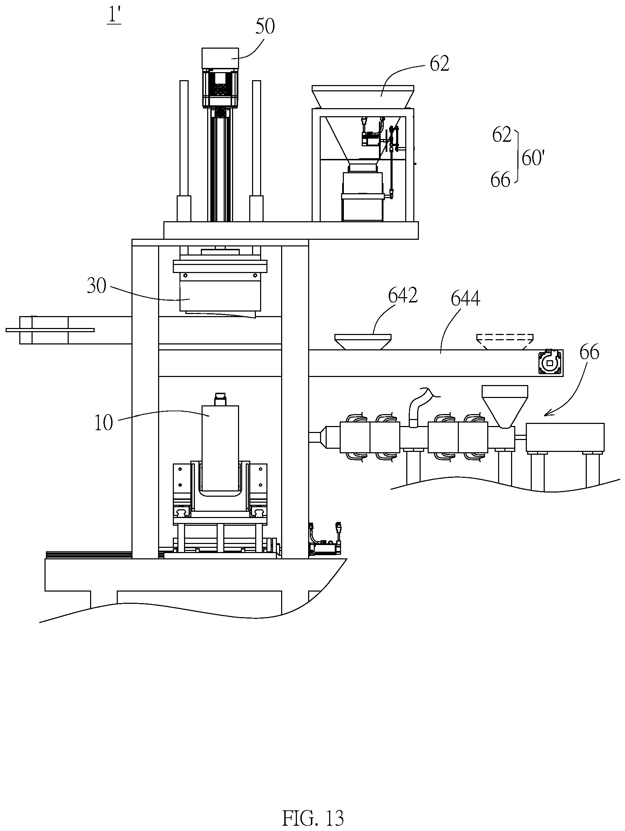

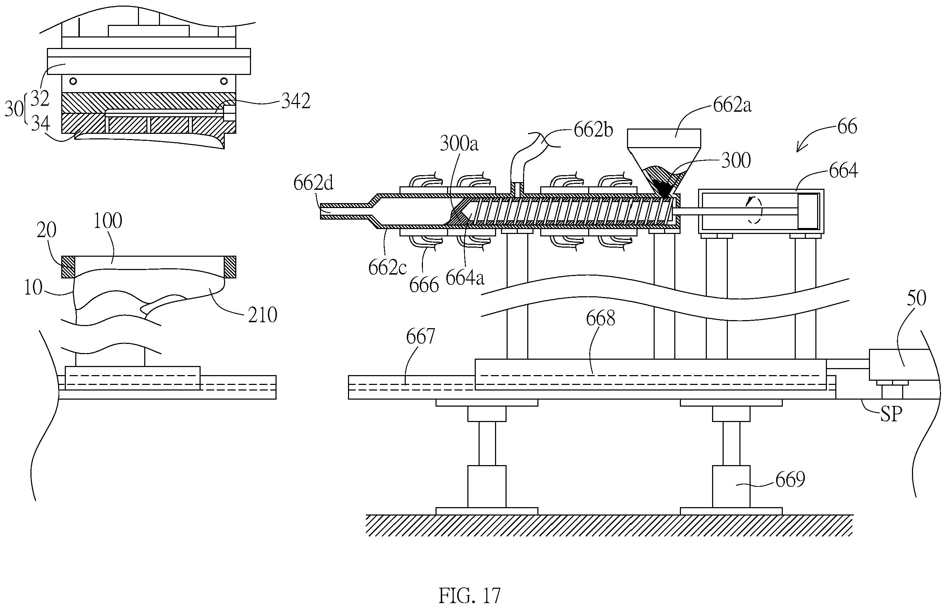

As shown in FIG. 13, FIG. 13 is a schematic view of the automatic shoe-making device 1' in another embodiment of the invention. The automatic shoe-making device 1' has a structure substantially the same as or similar to the automatic shoe-making device 1 of FIG. 1. For example, the connections and functions of the bottom mold unit 10, the side mold units 20 (shown in FIG. 17), the pressing mold unit 30, and the control unit 40 can refer to the related descriptions of the automatic shoe-making device 1. Moreover, one or more automatic shoe-making devices 1' can work with the conveying unit 80 and multiple bottom mold units 10 (e.g. 10A and/or 10B) to achieve the uninterrupted production and increase the productivity as described in FIG. 11. Hereinafter, the difference of the automatic shoe-making device 1', such as the structure and operation of the feeding unit 60', will be described.

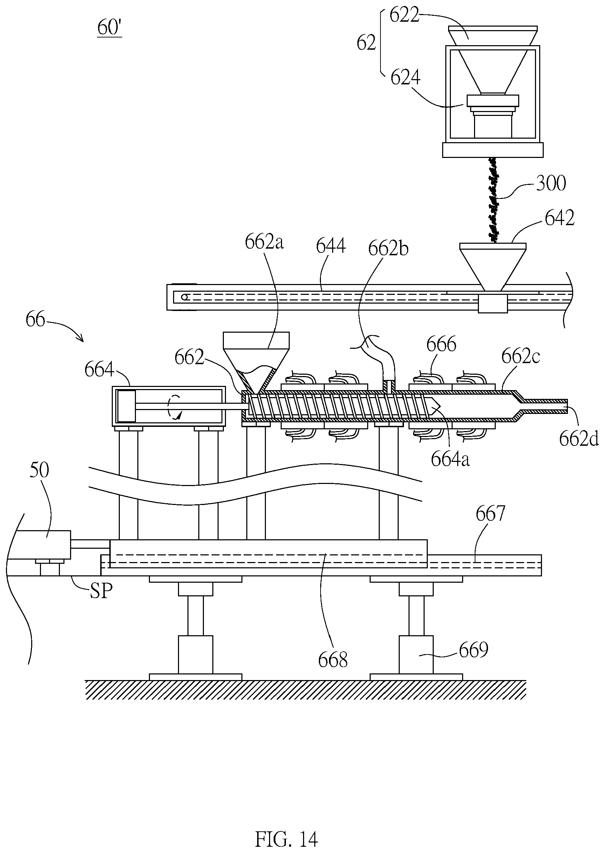

Referring to FIG. 13 and FIG. 14, in this embodiment, the feeding unit 60' includes a sole material supplier 62 and a feeder 66. The sole material supplier 62 is configured to supply the sole material 300 (i.e., the sole material in the previous embodiment) to the feeder 66, and the feeder 66 feeds the sole material 300 into the mold cavity 100 in a supercritical fluid state. Specifically, the sole material supplier 62 can have a structure and a function the same as or similar to that in the embodiment of FIG. 1. For example, the sole material supplier 62 can include the sole material container 622 configured to contain the sole material 300 and the dispenser 624 configured to dispense the sole material 300 to the feeder 66 in a predetermined amount. In this embodiment, the feeding unit 60' can further include the feeding funnel 642 and the funnel rack 644 similar to those described in the previous embodiment, so the sole material supplier 62 can supply the sole material 300 to the feeder 66 through the feeding funnel 642 by moving the feeding funnel 642 on the funnel rack 644, but not limited thereto. In other embodiments (not shown), the feeding unit 60' can have the sole material supplier 62 disposed corresponding to the feeder 66, so the sole material supplier 62 can directly supply the sole material 300 to the feeder 66 without using the feeding funnel 642. It is noted that the details of the sole material container 622, the dispenser 624, the feeding funnel 642, and the funnel rack 644 can refer to the related descriptions of the previous embodiment and will not elaborate again.

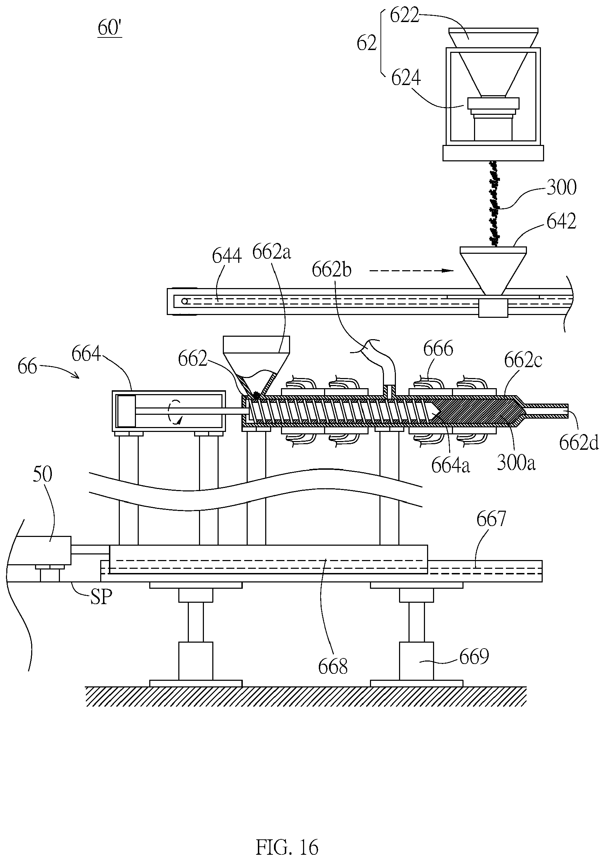

As shown in FIG. 14, in this embodiment, the feeder 66 can include a mixing unit 662 and an extrusion unit 664. The mixing unit 662 is configured to mix the sole material 300 with gas to form a mixture 300a (shown in FIG. 16) in the supercritical fluid state. The extrusion unit 664 is configured to extrude the mixture 300a into the mold cavity 100 in the supercritical fluid state. The feeding unit 60' can further include a driving unit 50, which is configured to drive the feeder 66 (such as the mixing unit 662 and the extrusion unit 664) to move relative to the bottom mold unit 10. For example, the mixing unit 662 and the extrusion unit 664 can be disposed on a support table 668 . The driving unit 50 is connected to the support table 668, so the support table 668 can be driven by the driving unit 50 to move (e.g. horizontally) together with the mixing unit 662 and the extrusion unit 664 along the rail 667 relative to the bottom mold unit 10. Similar to the previous embodiment, the driving unit 50 is connected to the control unit 40, and the control unit 40 can independently control the driving unit 50 according to the process settings, so the feeding unit 60' can perform the required operations of the process. The details of the driving unit 50 (such as the driving means and the driving shaft) can refer to the related descriptions of the previous embodiment.

Moreover, in an embodiment, the feeder 66 further includes a lifting unit 669. The lifting unit 669 is configured to drive the mixing unit 662 and the extrusion unit 664 to move upward or downward with respect to the bottom mold unit 10. For example, the lifting unit 669 can be disposed under the supporting plane SP for the rail 667 (and the driving unit 50). The lifting unit 669 is configured to lift or lower the supporting plane SP, so the components supported by the supporting plane SP (e.g. the driving unit 50, the rail 667, and the support table 668) are driven by the lifting unit 669 to move (e.g. vertically) with the mixing unit 662 and the extrusion unit 664 relative to the bottom mold unit 10. In an embodiment, the lifting unit 669 can be embodied as a pneumatic or hydraulic lifter, which is connected to the control unit 40. The control unit 40 can independently control the lifting unit 669 according to the process settings, so the feeder 66 can perform the required operations of the process, such as upward or downward movement. In an embodiment, the control unit 40 can control the lifting or lowering operation of the lifting unit 669 by a step motor, for example. It is noted that in this embodiment, the lifting unit 669 is disposed under the supporting plane SP for the rail 667, but not limited thereto. In another embodiment, according to practical applications, the lifting unit 669 can be disposed on the support table 668 and connected between the support table 668 and the feeder (e.g. the mixing unit 662 and the extrusion unit 664). As such, the lifting unit 669 can drive the mixing unit 662 and the extrusion unit 664 to move upward or downward relative to the support table 668.

It is noted that in the first time that the feeder 66 is coupled to the mold formed with the feeding channel, the lifting unit 669 can be used to perform the lifting or lowering adjustment to position the feeder 66 at a corresponding height. As such, when using the same mold for continuous operations, the height adjustment of the feeder 66 is not necessary and can be omitted. Each time when the mold formed with the feeding channel is changed, the lifting unit 669 can be used again to adjust the height of the feeder 66 to position the discharging portion 664d corresponding to the inlet of the feeding channel, so the feeder 66 can be adapted to the feeding channels at different heights (such as 342 or 201).

The mixing unit 662 includes a cylindrical body 662c, a material inlet 662a, a gas inlet 662b, and a discharging port 662d. For example, the cylindrical body 662c can be a hollow tube-shaped body, so the inner space can serve as an accommodation chamber and a mixing room for the sole material 300 and gas. The material inlet 662a is disposed on the cylindrical body 662c and communicates with the inner space of the cylindrical body 662c, so the sole material 300 can be supplied into the cylindrical body 662c through the material inlet 662a. The gas inlet 662b is disposed on the cylindrical body 662c and communicates with the inner space of the cylindrical body 662c, so gas can be supplied into the cylindrical body 662c through the gas inlet 662b. The discharging port 662d is preferably disposed at an end of the cylindrical body 662c and is configured to serve as the outlet for the mixture 300a in the supercritical fluid state. The discharging port 662d also serves as a connection portion for connecting the mold (e.g. the pressing mold 34 of the pressing mold unit 30 or the side molds 24A, 24B of the side mold units 20), so the discharging port 662d preferably has a tight connection with the mold. In an embodiment, the material inlet 662a can be designed in a funnel shape and is preferably disposed at another side of the cylindrical body 662c with respect to the discharging port 662d (e.g. the side that is adjacent to the extrusion unit 664). The gas inlet 662b can be disposed between the material inlet 662a and the discharging port 662d and apart from the discharging port 662d by a predetermined distance, so the sole material 300 from the material inlet 662a and the gas from the gas inlet 662b can be fully mixed in the cylindrical body 662c and then discharged from the discharging port 662d. The gas inlet 662b is connected between the cylindrical body 662c and an external gas source (not shown), so the external gas source can supply gas into the cylindrical body 662c through the gas inlet 662b.

The extrusion unit 664 is disposed adjacent to the mixing unit 662. The extrusion unit 664 includes a screw shaft 664a, which extends into the cylindrical body 662c of the mixing unit 662. The extrusion unit 664 can have a driving unit (not shown), which is configured to rotate and drive the screw shaft 664a, so the screw shaft 664a can stir the sole material 300 and gas to form the mixture 300a and extrude the mixture 300a from the discharging port 662d into the mold cavity 100. The screw shaft 664a is preferably a rod-shaped body with threads on the surface. The cylindrical body 662c of the mixing unit 662 and the screw shaft 664a of the extrusion unit 664 can form a syringe-like structure. When the screw shaft 664a moves toward the discharging port 662d, the mixture 300a can be discharged out of the cylindrical body 662c from the discharging port 662d.

The feeding unit 60' can further include a thermal device 666 (e.g. heater, cooler, and thermal sensor), which is configured to modulate the internal temperature of the cylindrical body 662c, so the sole material 300 and gas can be fully mixed in the cylindrical body 662c to form the mixture 300a in the supercritical fluid state.

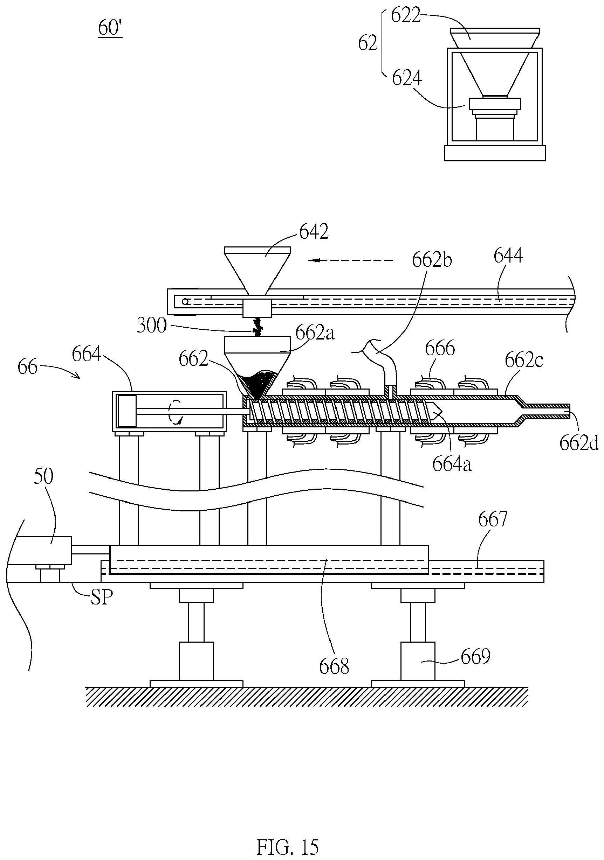

Hereafter, referring to FIG. 14 to FIG. 16, the material supply operation of the feeding unit 60' will be further described. First, as shown in FIG. 14, the feeding funnel 642 can be driven (for example, by the driving device 6444 as described above) to move along the funnel rack 644 to a position below the sole material supplier 62 for loading the sole material 300. The detailed operations of the feeding funnel 642 for loading and unloading the sole material 300 (such as the operation of the switch 6424 as described above) can refer to the related description of the previous embodiment and will not elaborate again. As shown in FIG. 15, the feeding funnel 642 loaded with the sole material 300 can be driven to move along the funnel rack 644 to a position above the material inlet 662a and supply the sole material 300 into the cylindrical body 662c through the material inlet 662a. In the meanwhile the external gas source can supply the gas into the cylindrical body 662c through the gas inlet 662b. In this embodiment, the gas serves as a foaming agent for the sole material 300, and any gas has a stable chemical property can be used. For example, the gas can be butane, Freon, helium, nitrogen, carbon dioxide, etc. Nitrogen is preferred because it is easy to obtain, environmentally friendly, and lower cost. As shown in FIG. 16, when the sole material 300 and the gas (e.g. nitrogen) are supplied into the cylindrical body 662c, the screw shaft 664a of the extrusion unit 664 is driven to rotate and stir, and the internal pressure and temperature of the cylindrical body 662c are controlled, so the sole material 300 and the gas are mixed to form the mixture 300a in the supercritical fluid (SCF) state. Supercritical fluid is a fluid whose temperature and pressure are both above the critical temperature and the critical pressure. Supercritical state is neither a gas phase nor a liquid phase, but has the dual advantages of a gas and a liquid. For example, supercritical fluid can diffuse easily like a gas and has a strong dissolvability like a liquid. Supercritical fluid has a density of liquid and a diffusibility of gas, so supercritical foaming can be performed at predetermined pressure and temperature.

It is noted that during the extrusion of the supercritical fluid state mixture 300a, the effect of fluid temperature control directly affects the quality of finished products. When the fluid temperature is too high, the extruded material will degrade. When the fluid temperature is too low, the formed material will have poor plasticization and poor fluidity, resulting in problems of poor molding caused by abnormal extrusion. Therefore, in the mixing unit 662, the supercritical fluid state mixture 300a (e.g. polymer + nitrogen) is preferably formed as a single uniform fluid, and the temperature, pressure, the supply amount of nitrogen, etc. are preferably dynamically controlled by a high coupling control system. Moreover, the control precision of temperature, specifically for the discharging port 622d, influences the performance of foamed product formed by the supercritical fluid state mixture 300a. Therefore, the mold that is coupled with the discharging port 622d (e.g. the pressing mold unit 30, the side mold units 20) preferably has a thermal device, so the sole material can remain in the supercritical fluid state while the feeder 66 supplies the sole material 300 (i.e. the mixture 300a in the supercritical fluid state) into the mold cavity 100.

Moreover, as shown in FIG. 16, after the feeding funnel 642 supplies the sole material 300 to the mixing unit 662, the feeding funnel 642 can be driven to move along the funnel rack 644 to the position below the sole material supplier 62 for loading the sole material 300 again, facilitating the reduction in lag time for the continuous production.

Referring to FIG. 17 to FIG. 22, the operation of the automatic shoe-making device 1' of FIG. 13 will be described. In this embodiment, corresponding to the disposition of the feeder 66, the pressing mold unit 30 preferably has a feeding channel 342. The discharging port 662d of the mixing unit 662 is configured to engage with the pressing mold unit 30, so the feeding channel 342 can communicate with the internal space of the cylindrical body 662c. In the operation state of FIG. 17, the mixing unit 662 of the feeder 66 performs the material supply operation of FIG. 14 to FIG. 16 to form the mixture 300a (i.e., the sole material 300 + gas) in the supercritical fluid state. In the meanwhile the upper 210 is preferably disposed on the shoe last of the bottom mold unit 10, and the side mold units 20 are coupled with the bottom mold unit 10 in the combined configuration, so the side mold units 20 surround the shoe last to together form the mold cavity 100 for receiving the sole material. It is noted that when the shoe product or shoe component is to be formed with a patch, the patch can be disposed in the receiving portion of the side mold units 20 before the operation state of FIG. 17, specifically in the state that the bottom mold unit 10 is located outside he operation zone.

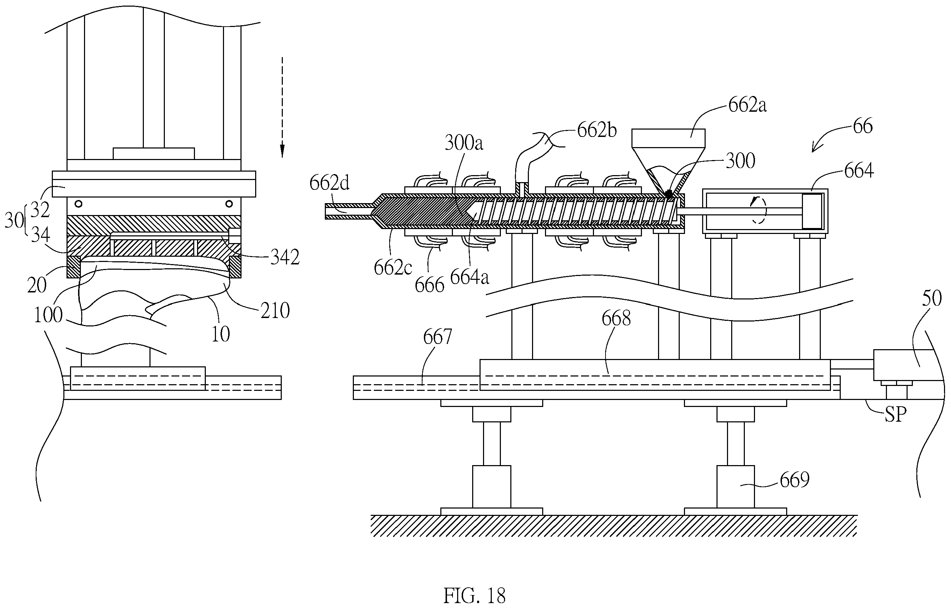

As shown in FIG. 18, the control unit (e.g. 40) controls the pressing mold unit 30 to move toward the bottom mold unit 10 (e.g. downward), so the pressing mold unit 30 closes the mold cavity 100 in a manner that the feeding channel 342 communicates with the mold cavity 100. In this stage, the mixing unit 662 of the feeder 66 preferably accomplishes the material supply operation of FIG. 14 to FIG. 16, and the mixture 300a (i.e., the sole material 300 + gas) in the supercritical fluid state is formed.

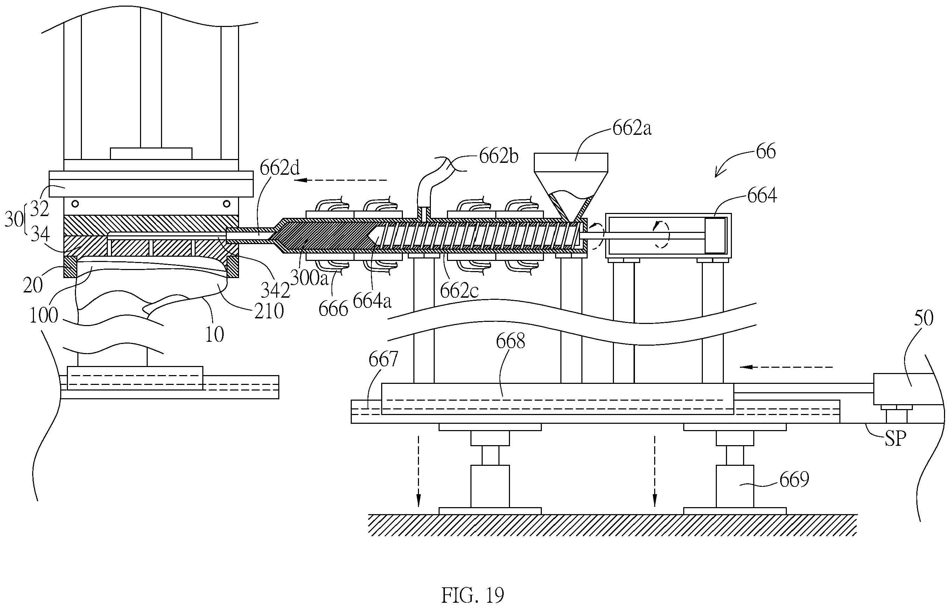

As shown in FIG. 19, the driving unit 50 of the feeder 66 drives the support table 668 to move with the mixing unit 662 and the extrusion unit 664 along the rail 667 toward the bottom mold unit 10, and the lifting unit 669 drives the mixing unit 662 and the extrusion unit 664 to lower (or lift) with respect to the feeding channel 342. As such, the discharging port 662d can be tightly coupled with the feeding channel 342 of the pressing mold unit 30. In other words, the mixing unit 662 of this embodiment moves horizontally and/or vertically to couple with the feeding channel 342 after the pressing mold unit 30 moves toward the mold cavity 100 to close the mold cavity 100, so as to allow the extrusion unit 664 extrudes the mixture 300a into the mold cavity 100 through the feeding channel 342. In the meanwhile the temperature of the pressing mold unit 30 is preferably modulated by the thermal device (such as the heating device 25 described above) to a temperature corresponding to the supercritical fluid state of the mixture 300a.

As shown in FIG. 20, after the discharging port 662d is coupled with the feeding channel 342, the extrusion unit 664 rotates and moves the screw shaft 664a toward the discharging port 662d, so the screw shaft 664a can extrude the mixture 300a in the supercritical fluid state from the discharging port 662d through the feeding channel 342 into the mold cavity 100.

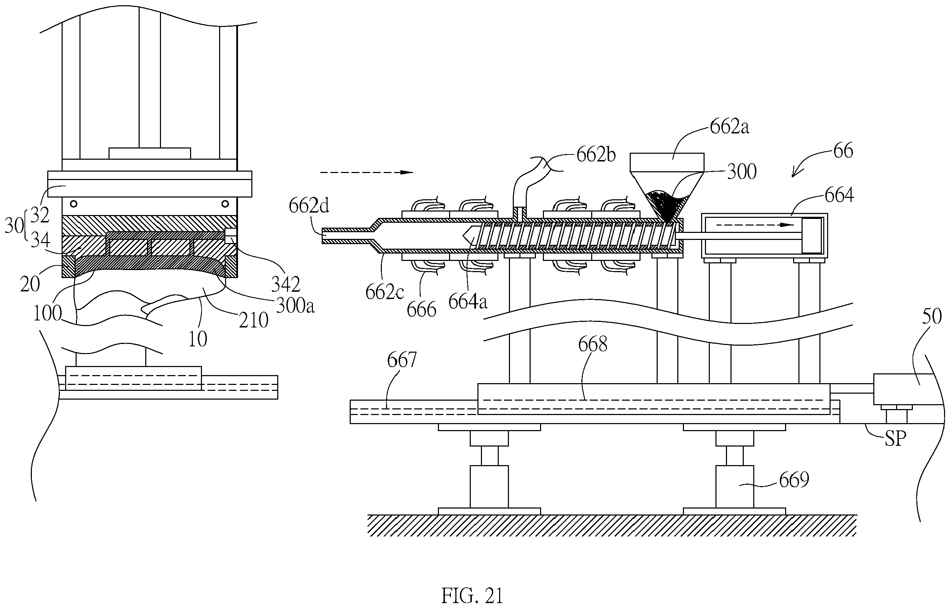

As shown in FIG. 21, after the feeder 66 extrudes the mixture 300a into the mold cavity 100, the driving unit 50 drives the support table 668 to move away from the bottom mold unit 10, and the mixing unit 662 and the extrusion unit 664 away from the pressing mold unit 30, so as to release the engagement of the discharging port 662d with the feeding channel 342 (i.e., detach the discharging port 662d from the feeding channel 342). In this stage, the temperature of the pressing mold unit 30 preferably is maintained at a temperature corresponding to the supercritical fluid state of the mixture 300a. As such, the mixture 300a in the feeding channel 342 can smoothly flow into the mold cavity 100 (for example, by gravity). In the meanwhile the feeder 66 can again perform the material supply operation (as shown in FIG. 14 to FIG. 16).

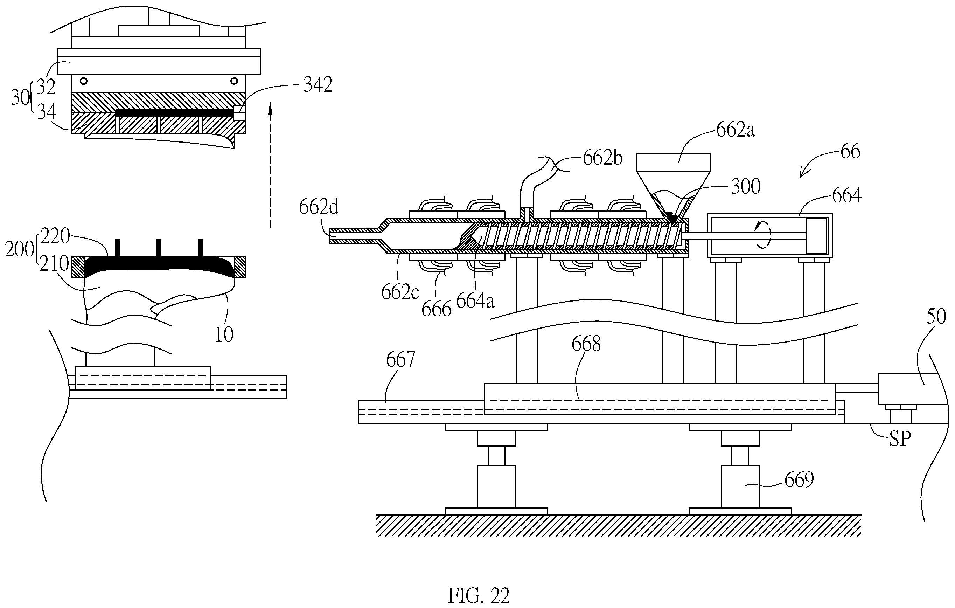

As shown in FIG. 22, the pressing mold unit 30 is driven to move away from the bottom mold unit 10 to allow the shoe product 200 or the shoe component (e.g. midsole 220) to be removed from the shoe last. Specifically, the mixture 300a in the mold cavity 100 after being hot-pressed by the pressing mold unit 30 and cooled can form the shoe product 200 or the shoe component. For example, in this embodiment, the finished shoe product 200 is a shoe product including integrally formed upper 210 and midsole 220. In this embodiment, a supercritical fluid rapid decompression method (solvent free) is implemented. For example, the uniform supercritical nitrogen (SC-N₂)/polymer system constituted by the saturation solution of nitrogen gas and polymer is rapidly decompressed at a predetermined process temperature. Due to the rapid change of pressure, the solubility of the supercritical nitrogen (SC-N₂) in polymer suddenly decreases, and a supersaturated solution is formed, which causes thermodynamic instability of the system and results in phase separation. Therefore, a large number of crystal nuclei are formed in the polymer, and the crystal nuclei continue to grow, eventually obtaining a foamed product having a porous structure, such as midsole 220 or outsole 230.

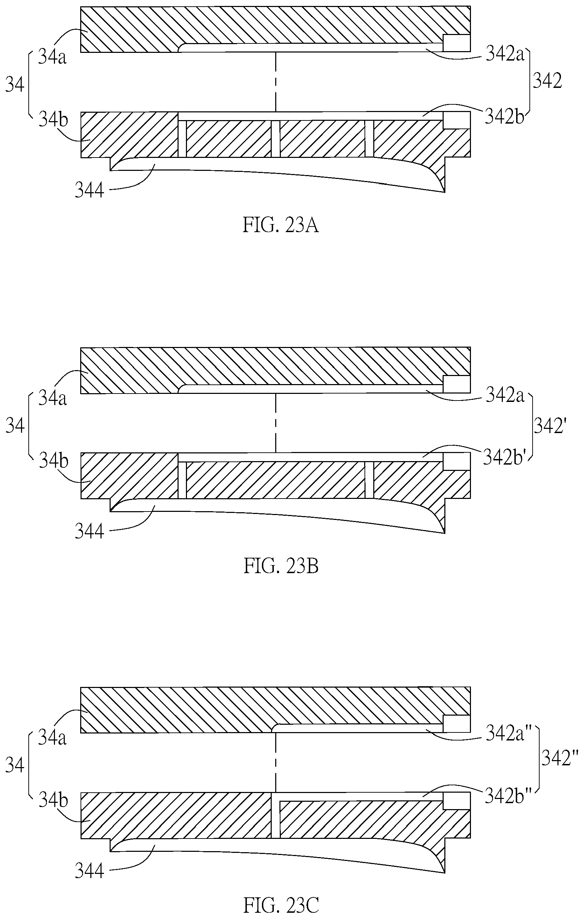

FIG. 23A to FIG. 23C are schematic views of the pressing mold units with different feeding channels. As shown in FIG. 23A to FIG. 23C, the pressing mold unit 30 can have feeding channels of different designs, such as fork-like (three-branch) feeding channel 342, dual-branch feeding channel 342', or single branch feeding channel 342", but not limited thereto. The configuration (or the number of branches) of the feeding channel can be designed according to the shape and size of the mold cavity 100, the usage quantity and fluidity of the mixture 300a, not limited to the embodiments. Moreover, the pressing mold unit 30 can have an accommodating space 344, which is configured to accommodate the outsole 230, so as to form an integral shoe product 200 including the upper 210, the midsole 220, and the outsole 230. When the accommodating space 344 accommodates no outsole 230, the accommodating space 344 and the mold cavity 100 together define a chamber for receiving the mixture 300a (as shown in FIG. 18). As such, a relatively thicker shoe sole (e.g. midsole 220) can be formed. In the embodiments of FIG. 23A to FIG. 23C, the pressing mold 34 of the pressing mold unit 30 preferably includes a first pressing mold 34a and a second pressing mold 34b. The first pressing mold 34a is connected between the pressing mold base 32 described above and the second pressing mold 34b. The first pressing mold 34a and the second pressing mold 34b are detachably engaged with each other. In an embodiment, the first pressing mold 34a is preferably detachably engaged with the pressing mold base 32 (for example, in the pneumatic joint manner described above). As shown in FIG. 23A, the first pressing mold 34a is formed with a first channel portion 342a, and the second pressing mold 34b is formed with a second channel portion 342b. When the first pressing mold 34a is engaged with the second pressing mold 34b, the first channel portion 342a communicates with the second channel portion 342b to form the three-branch feeding channel 342. Specifically, the first channel portion 342a can be the main channel of the feeding channel 342, and the second channel portion 342b can be the branch channels connected to the main channel. With such a configuration, by changing the second pressing mold 34b according to practical applications, the number of branches of the feeding channel can be changed. For example, as shown in FIG. 23B, when the first pressing mold 34a is engaged with the second pressing mold 34b, the first channel portion 342a communicates with the second channel portion 342b' to form the dual-branch feeding channel 342', but not limited thereto. As shown in FIG. 23C, the first pressing mold 34a and the second pressing mold 34b can have corresponding channel portions, so when the first pressing mold 34a is engaged with the second pressing mold 34b, the first channel portion 342a" communicates with the second channel portion 342b" to form the single branch feeding channel 342".

It is noted that in the embodiment of FIG. 13, the feeding channel 342 is disposed in the pressing mold unit 30, and the feeder 66 is coupled with the pressing mold unit 30 to allow the mixture 300a containing the sole material 300 and the gas to be fed into the mold cavity 100 in the supercritical fluid state, but not limited thereto. According to practical applications, the feeding channel can be disposed in the bottom mold unit 10 or the side mold units 20, and the feeder 66 is coupled with the bottom mold unit 10 or the side mold units 20, so the mixture 300a containing the sole material 300 and the gas can be fed into the mold cavity 100 in the supercritical fluid state through the feeding channel.

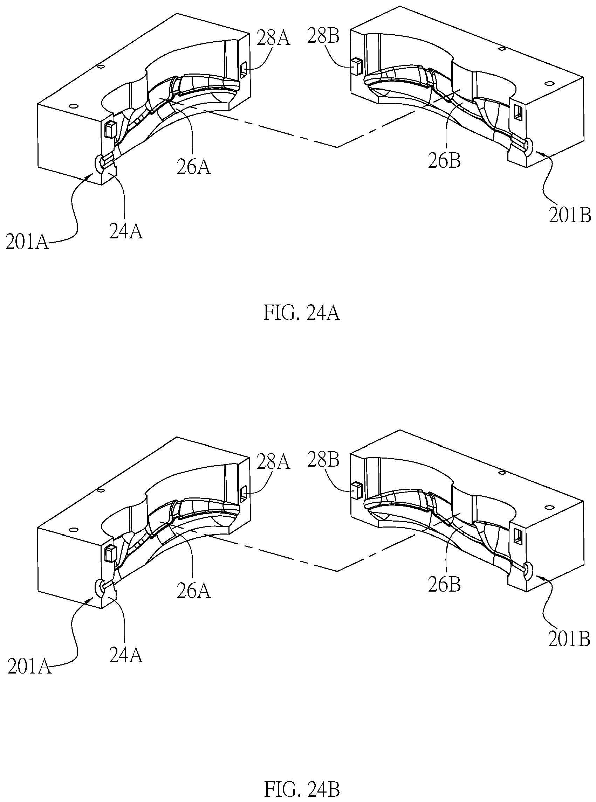

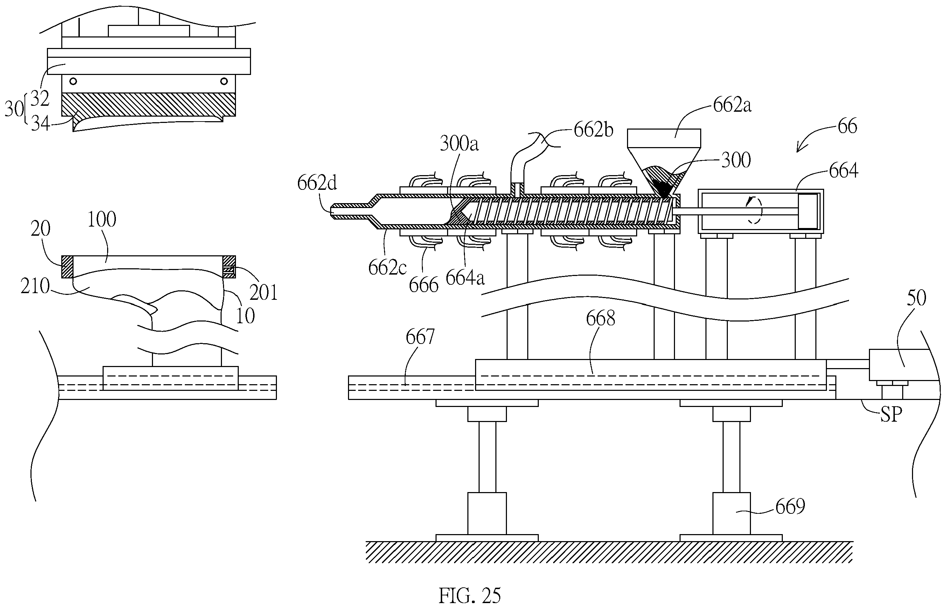

FIG. 24A and FIG. 24B are schematic views of the side molds in different embodiments. As shown in FIG. 24A and FIG. 24B, each of two side mold units (such as side molds 24A, 24B) is formed with a feeding groove (e.g. 201A, 201B). When the two side mold units form the combined configuration, the feeding grooves of the two side mold units communicate with each other to form the feeding channel (such as 201 shown in FIG. 25). Specifically, the feeding groove 201A or 201B can be formed at one side of the side mold 20A or 20B, so the feeding groove 201A or 201B is a recessed groove that penetrates from one end of the side mold 20A or 20B to communicate with the external environment. When the coupling portions 28A and 28B of the two side molds 24A, 24B are engaged with each other, the feeding grooves 201A and 201B form the feeding channel 201, which communicates with the mold cavity 100 and the external environment. In an embodiment, as shown in FIG. 24A, the feeding groove 201A or 201B can be a dual-branch groove. In another embodiment, as shown in FIG. 24B, the feeding groove 201A or 201B can be a single branch groove. It is noted that the configuration of the feeding groove 201A or 201B is not limited to the embodiments.

FIG. 25 to FIG. 30 are schematic views of the automatic shoe-making device equipped with the side molds of FIG. 24A in different operation states. Hereinafter, referring to FIG. 25 to FIG. 30, the operation of the automatic shoe-making device equipped with the side molds of FIG. 24A will be described. As shown in FIG. 25, corresponding to the disposition of the feeder 66, the side mold units 20 preferably has the feeding channel 201. The discharging port 662d of the mixing unit 662 is configured to engage with the feeding channel 201 of the side mold units 20, so the feeding channel 201 can communicate with the internal space of the cylindrical body 662c. Moreover, since the feeding channel 201 is disposed in the side mold units 20, the pressing mold 34 of the pressing mold unit 30 can be a single pressing mold having the accommodating space 344. In the operation state of FIG. 25, except that the location of the feeding channel 201 and the design of the single pressing mold 34 are different from the embodiment of FIG. 17, other operations and components can refer to the related descriptions of FIG. 17. For example, the mixing unit 662 of the feeder 66 performs the material supply operation of FIG. 14 to FIG. 16 to form the mixture 300a (i.e., the sole material 300 + gas) in the supercritical fluid state. The upper 210 is preferably disposed on the shoe last of the bottom mold unit 10, and the side mold units 20 are coupled with the bottom mold unit 10 in the combined configuration, so the side mold units 20 surround the shoe last to together form the mold cavity 100 for receiving the sole material.

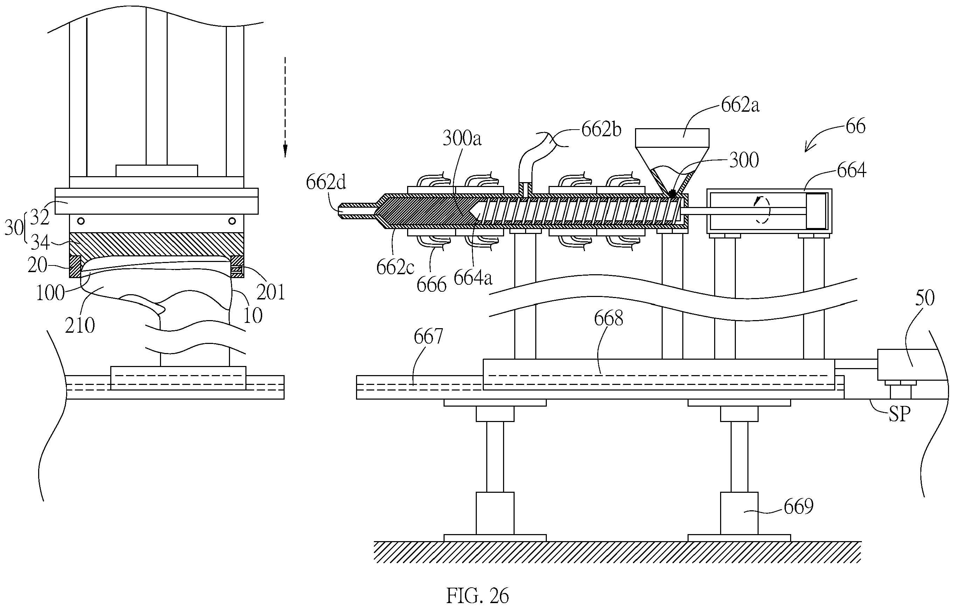

As shown in FIG. 26, the control unit (e.g. 40) controls the pressing mold unit 30 to move toward the bottom mold unit 10 (e.g. downward), so the pressing mold unit 30 closes the mold cavity 100. The mixing unit 662 of the feeder 66 preferably accomplishes the material supply operation of FIG. 14 to FIG. 16, and the mixture 300a (i.e., the sole material 300 + gas) in the supercritical fluid state is formed.

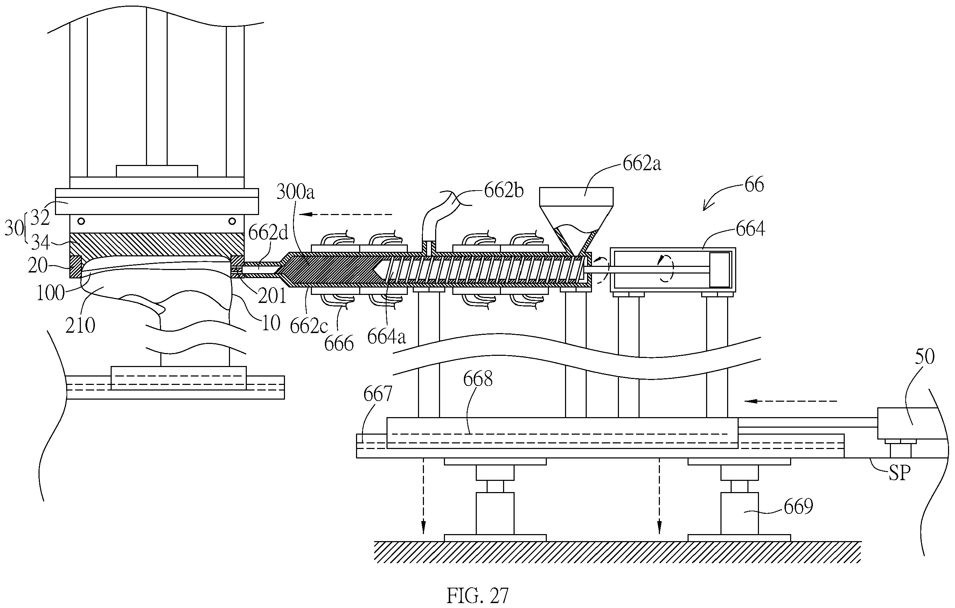

As shown in FIG. 27, the driving unit 50 of the feeder 66 drives the support table 668 to move with the mixing unit 662 and the extrusion unit 664 along the rail 667 toward the bottom mold unit 10, and the lifting unit 669 drives the mixing unit 662 and the extrusion unit 664 to lower (or lift) with respect to the feeding channel 201. As such, the discharging port 662d can be tightly coupled with the feeding channel 201 of the side mold units 20. In the meanwhile the temperature of the pressing mold unit 30 and the side mold units 20 are preferably modulated by the thermal device (such as the heating device 25 described above) to a temperature corresponding to the supercritical fluid state of the mixture 300a.

As shown in FIG. 28, after the discharging port 662d is coupled with the feeding channel 201, the extrusion unit 664 rotates and moves the screw shaft 664a toward the discharging port 662d, so the screw shaft 664a can extrude the mixture 300a in the supercritical fluid state from the discharging port 662d through the feeding channel 342 into the mold cavity 100.

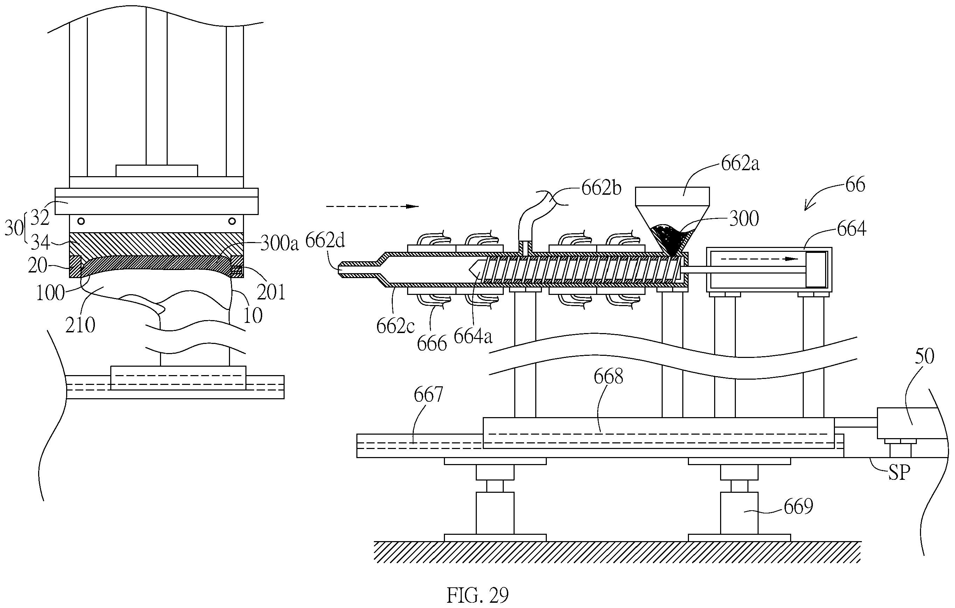

As shown in FIG. 29, after the feeder 66 extrudes the mixture 300a into the mold cavity 100, the driving unit 50 drives the support table 668 to move away from the bottom mold unit 10, and the mixing unit 662 and the extrusion unit 664 away from the side mold units 20, so as to release the engagement of the discharging port 662d with the feeding channel 201 (i.e., detach the discharging port 662d from the feeding channel 201). In the meanwhile the feeder 66 can again perform the material supply operation (as shown in FIG. 14 to FIG. 16).

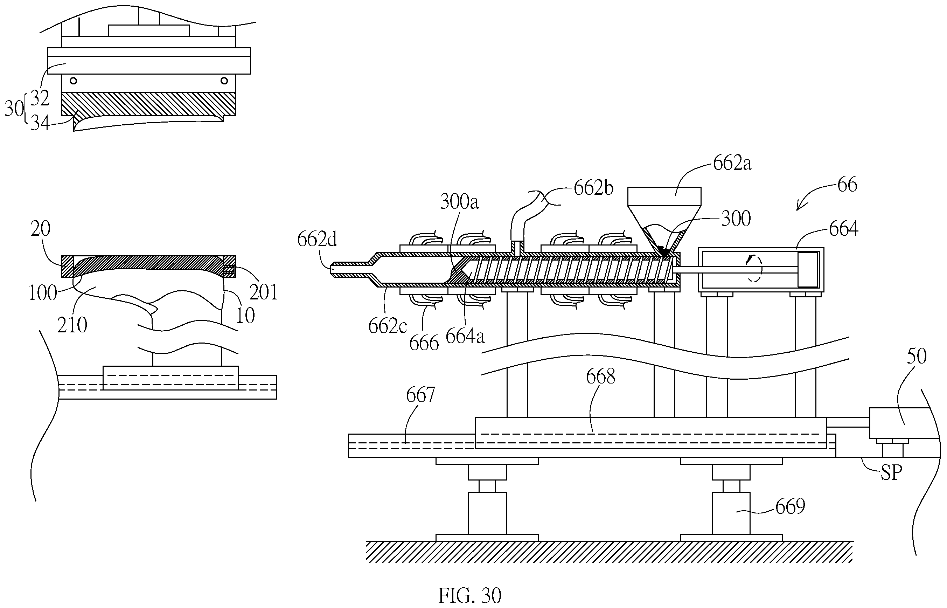

As shown in FIG. 30, the pressing mold unit 30 is driven to move (e.g. upward) away from the bottom mold unit 10 to allow the shoe product 200 or the shoe component (e.g. midsole 220) to be removed from the shoe last. Specifically, the mixture 300a in the mold cavity 100 after being hot-pressed by the pressing mold unit 30 and cooled can form the shoe product 200 or the shoe component.

Although the preferred embodiments of the present invention have been described herein, the above description is merely illustrative. The preferred embodiments disclosed will not limit the scope of the present invention. Further modification of the invention herein disclosed will occur to those skilled in the respective arts and all such modifications are deemed to be within the scope of the invention as defined by the appended claims.

## Claims

1. An automatic shoe-making device (1'), comprising:
a bottom mold unit (10) comprising a shoe last (14) configured to selectively receive an upper (210);
two side mold units (20) disposed at two sides of the bottom mold unit (10) and driven to combine with or separate from each other along a first direction;
a pressing mold unit (30) driven to be movable relative to the bottom mold unit (10) along a second direction perpendicular to the first direction;
a feeding unit (60') configured to feed a sole material (300) in a supercritical fluid state; and
a control unit (40) configured to:
control the two side mold units (20) to move toward the bottom mold unit (10) to form a combined configuration, so the two side mold units (20) surround the shoe last (14) to together form a mold cavity (100);
control the pressing mold unit (30) to move toward the bottom mold unit (10) to close the mold cavity (100);
control the feeding unit (60') to feed the sole material (300) into the mold cavity (100) in the supercritical fluid state;
control the pressing mold unit (30) to hot-press the sole material (300) to form a shoe product (200) or a shoe component (220, 230); and
control the pressing mold unit (30) and the two side mold units (20) to move away from the bottom mold unit (10) to allow the shoe product (200) or the shoe component (220, 230) to be removed from the shoe last (14).

2. The automatic shoe-making device (1') of claim 1, wherein the bottom mold unit (10) is movable along a third direction to get close to or away from an operation zone; the pressing mold unit (30) and the two side mold units (20) are driven to move relative to the bottom mold unit (10) located in the operation zone; the third direction is perpendicular to the first direction and the second direction.

3. The automatic shoe-making device (1') of claim 1, wherein each of the two side mold units (20) comprises a side mold base (22A, 22B) and a side mold (24A, 24B); the pressing mold unit (30) comprises a pressing mold base (32) and a pressing mold (34); the bottom mold unit (10) comprises a bottom mold base (12); the side mold (24A, 24B) and the side mold base (22A, 22B), the pressing mold (34) and the pressing mold base (32), or the bottom mold base (12) and the shoe last (14) are detachably combined with each other in a pneumatic joint manner.

4. The automatic shoe-making device (1') of claim 3, wherein at least one of the side mold base (22A, 22B), the pressing mold base (32), and the bottom mold base (12) comprises a thermal device (25, 27) and a thermal sensor (29); the thermal device (25, 27) modulates a temperature of the at least one of the side mold base (22A, 22B), the pressing mold base (32), and the bottom mold base (12) to a hot-press temperature or a mold-release temperature based on a temperature sensed by the thermal sensor (29).

5. The automatic shoe-making device (1') of claim 2, further comprising a conveying unit (80) configured to convey the bottom mold unit (10) close to or away from the operation zone.

6. The automatic shoe-making device (1') of claim 5, wherein the automatic shoe-making device (1') comprises a plurality of the bottom mold units (10); the conveying unit (80) sequentially conveys the plurality of bottom mold units (10) to the operation zone for forming the shoe product (200) or the shoe component (220, 230).

7. The automatic shoe-making device (1') of claim 1, wherein the shoe component (220, 230) comprises an outsole (230), a midsole (220), a sole comprising a midsole and an outsole, a midsole with a patch, or a sole comprising a midsole with a patch and an outsole; the shoe product (200) comprises an integral shoe product comprising a midsole (220) and the upper (210), an integral shoe product comprising a midsole (220), an outsole (230) and the upper (210), an integral shoe product comprising a midsole with a patch and the upper (210), or an integral shoe product comprising a midsole with a patch, an outsole and the upper (210).

8. The automatic shoe-making device (1') of claim 1, wherein the feeding unit (60') comprises a sole material supplier (62) and a feeder (66); the sole material supplier (62) is configured to supply the sole material (300) to the feeder (66); the feeder (66) feeds the sole material (300) into the mold cavity (100) in the supercritical fluid state.

9. The automatic shoe-making device (1') of claim 8, wherein the feeder (66) comprises a mixing unit (662) and an extrusion unit (664); the mixing unit (662) is configured to mix the sole material (300) with gas to form a mixture (300a) in the supercritical fluid state; the extrusion unit (664) is configured to extrude the mixture (300a) into the mold cavity (100).

10. The automatic shoe-making device (1') of claim 9, wherein the pressing mold unit (30) has a feeding channel (342, 342', 342"); the mixing unit (662) moves toward the mold cavity (100) to couple with the feeding channel (342, 342', 342") after the pressing mold unit (30) moves to close the mold cavity (100), so as to allow the extrusion unit (664) to extrude the mixture (300a) into the mold cavity (100) through the feeding channel (342, 342', 342").

11. The automatic shoe-making device (1') of claim 10, wherein the pressing mold unit (30) comprises a pressing mold base (32), a first pressing mold, and a second pressing mold (34b) detachably engaged with the first pressing mold (34a); the first pressing mold (34a) is connected between the pressing mold base (32) and the second pressing mold (34b); the first pressing mold (34a) has a first channel portion (342a); the second pressing mold (34b) has a second channel portion (342b); when the first pressing mold (34a) is engaged with the second pressing mold (34b), the first channel portion (342a) communicates with the second channel portion (342b) to form the feeding channel (342, 342', 342").

12. The automatic shoe-making device (1') of claim 9, wherein each of the two side mold units (20) has a feeding groove (201A, 201B); when the two side mold units (20) form the combined configuration, the feeding grooves (201A, 201B) of the two side mold units (20) communicate with each other to from a feeding channel (201).

13. The automatic shoe-making device (1') of claim 10 or 12, wherein the feeder (66) further comprises a driving unit (50) configured to drive the mixing unit (662) and the extrusion unit (664) to move horizontally, so the mixing unit (662) couples with or detaches from the feeding channel (342, 201).

14. The automatic shoe-making device (1') of claim 10 or 12, wherein the feeder (66) further comprises a lifting unit (669) configured to drive the mixing unit (662) and the extrusion unit (664) to move upward or downward with respect to the feeding channel (324, 210).

15. The automatic shoe-making device (1') of claim 8, wherein each of the feeder (66) and the pressing mold unit (30) is equipped with a thermal device (25, 27); the thermal device (25, 27) is configured to keep the sole material (300) in the supercritical fluid state during the feeder (66) feeds the sole material (300) into the mold cavity (100).
